(19) Europäisches Patentamt / European Patent Office / Office européen des brevets

(11) **EP 4 475 427 B1**

(12) **EUROPEAN PATENT SPECIFICATION**

(45) Date of publication and mention
of the grant of the patent:
**20.05.2026   Bulletin 2026/21**

(21) Application number: **23922896.8**

(22) Date of filing: **05.12.2023**

(51) International Patent Classification (IPC):
*H02P 27/08* (2006.01)        *H02P 23/04* (2006.01)
*H02P 21/22* (2016.01)

(52) Cooperative Patent Classification (CPC):
**H02P 27/08; H02P 21/22;** B62D 5/046

(86) International application number:
**PCT/JP2023/043449**

(87) International publication number:
**WO 2024/171563 (22.08.2024 Gazette 2024/34)**

(54) **MOTOR CONTROL DEVICE AND ELECTRIC POWER STEERING DEVICE**

MOTORSTEUERUNGSVORRICHTUNG UND ELEKTRISCHE SERVOLENKVORRICHTUNG

DISPOSITIF DE COMMANDE DE MOTEUR ET DISPOSITIF DE DIRECTION ASSISTÉE
ÉLECTRIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:   **15.02.2023   JP 2023021717**

(43) Date of publication of application:
**11.12.2024   Bulletin 2024/50**

(73) Proprietor: **NSK Steering & Control, Inc.
Tokyo, 141-0032 (JP)**

(72) Inventor: **MIKI, Yasutoshi
Maebashi-shi, Gunma 371-8527 (JP)**

(74) Representative: **Rings, Rolf
Klingseisen, Rings & Partner
Patentanwälte
Postfach 10 15 61
80089 München (DE)**

(56) References cited:
EP-A1- 3 364 538          WO-A1-2013/084289
JP-A- 2017 093 240        JP-A- 2018 182 889
US-A1- 2018 302 008

**Description**

Technical Field

The present disclosure relates to a motor control device and an electric power steering device.

Background Art

Conventionally, motor control devices that perform measurement of phase currents of respective phases of a bridge circuit configured to rotation-drive a polyphase motor in a first measurement period or a second measurement period that is later than the first measurement period have been proposed (see, for example PTL 1). A motor control device described in PTL 1 is configured to perform measurement of phase currents in a first measurement period when a maximum target duty ratio among target duty ratios of PWM signals to drive respective switching elements in a bridge circuit is less than or equal to a first threshold value or when the maximum target duty ratio is greater than the first threshold value and a second-largest target duty ratio is greater than or equal to a second threshold value. The motor control device is also configured to perform the measurement of the phase currents in a second measurement period when the maximum target duty ratio is greater than the first threshold value and the second-largest target duty ratio is less the second threshold value. Because of this configuration, the motor control device is configured to alternately switch a measurement period between the first measurement period and the second measurement period.

Citation List

Patent Literature

PTL 1: JP 6725450 B
EP3364538 A1 relates to an AC rotary machine control device, and an electric power steering device provided with the same which superimposes the 5th order and the 7th order harmonic voltages on the AC voltage applied to the AC rotary machine by calculation processing of low processing load, and an electric power steering device provided with the same. According to this document the voltage command correction unit, for each set, determines a basic voltage command of a phase which becomes a middle voltage among the three phase basic voltage commands, as a middle voltage command.

Summary of Invention

Technical Problem

However, when the measurement of the phase currents is performed in the second measurement period, a phase shift occurs among the measured phase currents compared with a case where the measurement is performed in the first measurement period and a detection result of q-axis current becomes small. Thus, such a detection result being fed back causes a larger amount of q-axis current to flow and output torque of the polyphase motor to increase. Therefore, in the motor control device described in PTL 1, there has been a possibility that in association with switching between the first measurement period and the second measurement period, the output torque of the polyphase motor varies and operation noise and vibration are generated in a device on which the polyphase motor is mounted.
An object of the present invention is to provide a motor control device and an electric power steering device capable of suppressing variation in output torque of a polyphase motor.

Solution to Problem

In order to achieve the above-described object, a motor control device according to one aspect of the present invention is defined in independent claim 1: (a) a motor control device configured to control a polyphase motor having three or more phases and includes: (b) a bridge circuit configured by connecting in parallel phase circuits each formed corresponding to one of phases of the polyphase motor and including in series a high-potential-side switching element, a low-potential-side switching element, and a shunt resistor arranged on a low potential side of the low-potential-side switching element; (c) a phase current measurement unit configured to measure phase currents flowing through the shunt resistors in a first measurement period or a second measurement period, the second measurement period being started later than the first measurement period; (d) a PWM signal generation unit configured to, with respect to each phase of the polyphase motor, calculate, based on the phase current, a target duty ratio, the target duty ratio being a target duty ratio of a PWM signal to drive the high-potential-side switching element and the low-potential-side switching element, having amplitude of a predetermined magnitude, and varying at most from 0% to 100% with 50% as a vibration center value, and output the PWM signal having the calculated target duty ratio to a gate of each of the high-potential-side switching element and the low-potential-side switching element; and (e) a storage unit configured to store a first threshold value set to be a predetermined value smaller than a smaller duty ratio of a duty ratio at which a switching noise, the switching noise being caused by the high-potential-side switching element and the low-potential-side switching element to gates of which the PWM signal having a maximum target duty ratio among the target duty ratios is input, starts to overlap in the first measurement period and a duty ratio corresponding to a timing at which the first measurement period ends and a second threshold value, the second threshold value being a duty ratio at which a timing at which the low-potential-side switching element to a gate of which the PWM signal having a second duty ratio, the second duty ratio being a second-largest target duty ratio among the target duty ratios, is input is switched from an on state to an off state is later than an end of the second measurement period, and (f) the phase current measurement unit performs detection of the phase currents in the first measurement period when a target duty ratio amplitude value, the target duty ratio amplitude value being a value obtained by adding 50% points to amplitude of the target duty ratios, is less than the first threshold value or when the target duty ratio amplitude value is greater than or equal to the first threshold value and the second duty ratio is greater than the second threshold value, and (g) performs measurement of the phase currents in the second measurement period when the target duty ratio amplitude value is greater than or equal to the first threshold value and the second duty ratio is less than or equal to the second threshold value.

In addition, an electric power steering device according to another aspect of the present invention includes (a) the above-described motor control device and (b) a polyphase motor controlled by the motor control device, and (c) the electric power steering device provides a steering system of a vehicle with steering assist force by the polyphase motor.

Advantageous Effects of Invention

According to the one aspect of the present invention, it is possible to provide a motor control device and an electric power steering device capable of suppressing variation in output torque of a polyphase motor.

Brief Description of Drawings

FIG. 1 is a diagram illustrative of an overall configuration of an electric power steering device according to a first embodiment;
FIG. 2 is a diagram illustrative of a configuration of an electronic control unit;
FIG. 3 is a diagram illustrative of a third harmonic wave of a SIN wave type;
FIG. 4 is a diagram illustrative of a configuration of an inverter;
FIGS. 5A to 5G are diagrams illustrative of a relationship among a carrier wave of PWM signals, gate voltages, and the PWM signals;
FIG. 6 is a diagram illustrative of a flowchart of timing generation processing;
FIG. 7 is a diagram illustrative of a flowchart of timing generation processing of a comparative example;
FIGS. 8A to 8C are diagrams illustrative of a relationship among target duty ratios of the PWM signals, measurement timing of phase currents, and output torque of a motor in a motor control device;
FIGS. 9A to 9C are diagrams illustrative of simulation results of the target duty ratios of the PWM signals, the measurement timing of the phase currents, and the output torque of the motor;
FIG. 10 is a diagram illustrative of a third harmonic wave of a triangular wave type in a variation (1);
FIGS. 11A to 11C are diagrams illustrative of another relationship among the target duty ratios of the PWM signals, the measurement timing of the phase currents, and the output torque of the motor in the motor control device;
FIGS. 12A to 12C are diagrams illustrative of other simulation results of the target duty ratios of the PWM signals, the measurement timing of the phase currents, and the output torque of the motor;
FIGS. 13A to 13C are diagrams illustrative of simulation results of the target duty ratios of the PWM signals, the measurement timing of the phase currents, and the output torque of the motor in a variation (2);
FIGS. 14A to 14C are diagrams illustrative of simulation results of the target duty ratios of the PWM signals, the measurement timing of the phase currents, and the output torque of the motor in a variation (3);
FIG. 15 is a diagram illustrative of a configuration of an electronic control unit in a variation (4);
FIGS. 16A to 16C are diagrams illustrative of still other simulation results of the target duty ratios of the PWM signals, the measurement timing of the phase currents, and the output torque of the motor; and
FIG. 17 is a diagram illustrative of an overall configuration of a linear motion table device to which the motor control device is applied.

Description of Embodiments

Examples of a motor control device and an electric power steering device according to an embodiment of the present invention will be described below with reference to the drawings. Note that the embodiment, which will be described below, indicates a device and a method to embody the technical idea of the present invention by way of example, and the technical idea of the present invention does not limit the configuration, arrangement, and the like of the constituent components to those described below. The technical idea of the present invention can be subjected to a variety of alterations within the technical scope prescribed by the claims described in CLAIMS.

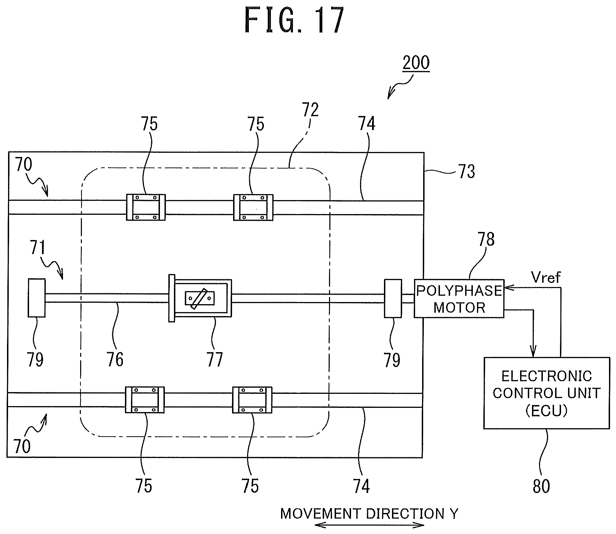

In addition, although in the following description, a case where the present invention is applied to a motor control device that is used in an electric power steering device of a vehicle and that controls a polyphase motor (for example, a three-phase motor) providing a steering assist force is described, the present invention is not limited to application to an electric power steering device and is widely applicable to various uses. For example, as illustrated in FIG. 17, the present invention may be applied to a motor control device controlling a motor that drives a linear motion table device.

The embodiment of the present invention is described in the following sequence.

1. First Embodiment

  1-1 Overall Configuration of Electric Power Steering Device
  1-2 Timing Generation Processing
  1-3 Variation

<1. First Embodiment>

[1-1 Overall Configuration of Electric Power Steering Device]

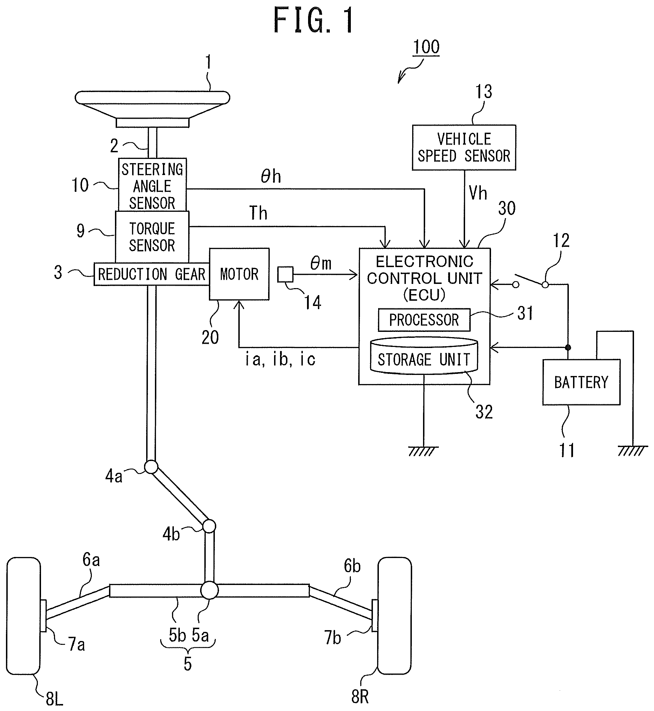

FIG. 1 is a diagram illustrative of an overall configuration of an electric power steering device 100 according to a first embodiment. As illustrated in FIG. 1, a steering shaft 2 of a steering wheel 1 is connected to steered wheels 8L and 8R by way of a reduction gear 3 that constitutes a speed reduction mechanism, universal joints 4a and 4b, a pinion rack mechanism 5, and tie rods 6a and 6b and further via hub units 7a and 7b.

The pinion rack mechanism 5 includes a pinion 5a that is coupled to a pinion shaft to which steering force is transmitted from the universal joint 4b and a rack 5b that meshes with the pinion 5a, and converts rotational motion transmitted to the pinion 5a to linear motion in the vehicle width direction by means of the rack 5b.

In addition, to the steering shaft 2, a torque sensor 9 configured to detect steering torque Th of a driver and a steering angle sensor 10 configured to detect a steering angle $\theta h$ of the steering wheel 1 are attached.

In addition, a motor 20 configured to provide steering assist force is connected to the steering shaft 2 via the reduction gear 3. As the motor 20, for example, a polyphase motor having three or more phases can be employed. In the following description, a case where a three-phase motor is used is described. The number of motors 20 may be configured to be two or more. The motor 20 may also be configured to include a plurality of sets of windings of three or more phases.

To an electronic control unit 30 (in a broad sense, the "motor control device") configured to control the electric power steering device 100, power is supplied from a battery 11 and an ignition key signal is also input by way of an ignition switch 12. The electronic control unit 30 performs calculation of current command values of an assist control command, based on steering torque Th detected by the torque sensor 9, a steering angle $\theta h$ detected by the steering angle sensor 10, and vehicle speed Vh detected by a vehicle speed sensor 13 and controls currents (for example, phase currents ia, ib, and ic of respective phases A, B, and C) to be supplied to the motor 20 by voltage command values obtained by performing compensation and the like on the current command values. That is, it can be said that the motor 20 is controlled by the electronic control unit 30 and provides a steering system of a vehicle with steering assist force.

Note that the steering angle sensor 10 is not an essential component and the steering angle $\theta h$ may be calculated by dividing a motor angle $\theta m$ obtained from a rotation angle sensor 14 configured to detect a rotation angle of a rotation shaft of the motor 20 by a gear ratio of the reduction gear 3 and adding a torsion angle of a torsion bar in the torque sensor 9 to a division result. As the rotation angle sensor 14, for example, a resolver that detects a rotational position of the motor 20 or a magnetic sensor that detects a magnetic field of a magnet attached to the rotation shaft of the motor 20 can be employed. In addition, a turning angle of the steered wheels 8L and 8R may be used in place of the steering angle $\theta h$. As a detection method of a turning angle of the steered wheels 8L and 8R, for example, a method for detecting the turning angle based on a displacement amount of the rack 5b can be employed. Measurement of the motor angle $\theta m$ is performed in a first measurement period $Ts_1$ that is a measurement period of the phase currents ia, ib, and ic.

The electronic control unit 30 includes, for example, a computer including a processor 31 and peripheral components, such as a storage unit 32. As the processor 31, for example, a central processing unit (CPU) or a micro-processing unit (MPU) can be employed. In addition, as the storage unit 32, for example, a semiconductor storage unit, a magnetic storage unit, or an optical storage unit can be employed. Examples of the storage unit 32 include a memory, such as a ROM and a RAM, that is used as registers, a cache memory, and a main storage. Functions of the electronic control unit 30, which will be described below, are achieved by, for example, the processor 31 of the electronic control unit 30 executing computer programs stored in the storage unit 32. In addition, the storage unit 32 stores various types of data necessary for executing computer programs, such as a first threshold value $TH_1$ and a second threshold value $TH_2$ that are used in timing generation processing, which will be described later.

Note that the computer may be formed using dedicated hardware for executing each type of information processing that will be described below. As the dedicated hardware, for example, functional logic circuits that are set in a general-purpose semiconductor integrated circuit can be employed. Examples of the functional logic circuits include a programmable logic device (PLD), such as a field-programmable gate array (FPGA), and the like.

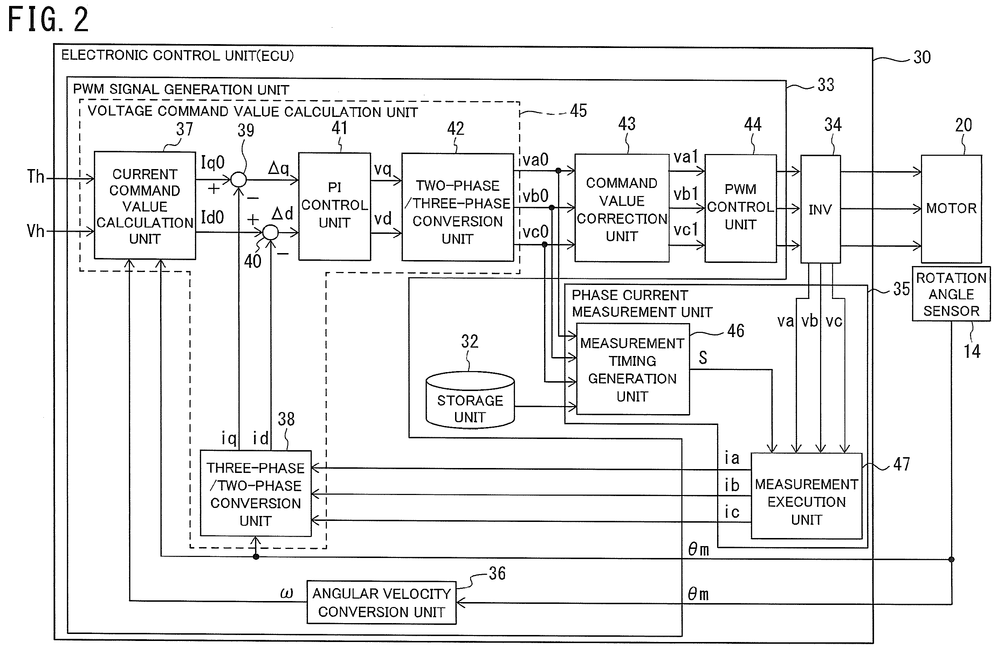

The electronic control unit 30 includes a PWM signal generation unit 33, an inverter 34, and a phase current measurement unit 35, as illustrated in FIG. 2.

The PWM signal generation unit 33 calculates, with respect to the respective phases A, B, and C of the motor 20, target duty ratios Da, Db, and Dc of PWM signals, based on the phase currents ia, ib, and ic, and outputs PWM signals having the calculated target duty ratios Da, Db, and Dc to gates of high-potential-side switching elements Qah, Qbh, and Qch and low-potential-side switching elements Qal, Qbl, and Qcl, respectively. Specifically, the PWM signal generation unit 33 includes an angular velocity conversion unit 36, a current command value calculation unit 37, a three-phase/two-phase conversion unit 38, subtracters 39 and 40, a PI control unit 41, a two-phase/three-phase conversion unit 42, a command value correction unit 43, and a PWM control unit 44. The current command value calculation unit 37, the three-phase/two-phase conversion unit 38, the subtracters 39 and 40, the PI control unit 41, and the two-phase/three-phase conversion unit 42 constitute a voltage command value calculation unit 45 that generates voltage command values va0, vb0, and vc0 of the phases A, B, and C, based on the phase currents ia, ib, and ic, respectively. The angular velocity conversion unit 36 to the PWM control unit 44 are achieved by the processor 31 executing computer programs stored in the storage unit 32.

The angular velocity conversion unit 36 calculates rotational angular velocity ω of the motor 20, based on the motor angle θm acquired from the rotation angle sensor 14. The rotational angular velocity ω is input to the current command value calculation unit 37. The current command value calculation unit 37 calculates a q-axis current command value Iq0 and a d-axis current command value Id0 that are required to be flowed through the motor 20, based on the steering torque Th acquired from the torque sensor 9, the vehicle speed Vh, the motor angle θm, and the rotational angular velocity ω of the motor 20. The q-axis current command value Iq0 is input to the subtracter 39. The d-axis current command value Id0 is input to the subtracter 40.

The three-phase/two-phase conversion unit 38 converts the phase currents ia, ib, and ic of the phases A, B, and C that are acquired from the phase current measurement unit 35 to currents id and iq of two axes d and q. The q-axis current iq is input to the subtracter 39. The d-axis current id is input to the subtracter 40.

The subtracter 39 calculates q-axis deviation current Δq by subtracting the q-axis current iq from the q-axis current command value Iq0. The subtracter 40 calculates d-axis deviation current Δd by subtracting the d-axis current id from the d-axis current command value Id0. The q-axis deviation current Δq and the d-axis deviation current Δd are input to the PI control unit 41.

The PI control unit 41 calculates a q-axis voltage command value vq and a d-axis voltage command value vd to bring the q-axis deviation current Δq and the d-axis deviation current Δd to 0, respectively. The q-axis voltage command value vq and the d-axis voltage command value vd are calculated as duty ratios in a range from - 50% to 50%. The q-axis voltage command value vq and the d-axis voltage command value vd are input to the two-phase/three-phase conversion unit 42.

The two-phase/three-phase conversion unit 42 converts the d-axis voltage command value vd and the q-axis voltage command value vq to the voltage command values va0, vb0, and vc0 of the phases A, B, and C that have amplitude $A_0$ of a predetermined magnitude and that vary at most from -50% to 50% with 0% as a vibration center value. Hereinafter, the voltage command values va0, vb0, and vc0 of the phases A, B, and C are also referred to as "three-phase voltage command values va0, vb0, and vc0". The three-phase voltage command values va0, vb0, and vc0 are sine waves or cosine waves that have the same amplitude $A_0$ and that have phases shifted from each other by 120°, as expressed by the equation (1) below. In the equation (1) below, a case where sine waves are used is described. The magnitude of the amplitude $A_0$ changes due to, for example, voltage of the battery 11 or target output torque of the motor 20.

$$va0 = A_0 \cdot \sin\theta, \quad vb0 = A_0 \cdot \sin(\theta - 2/3 \cdot \pi),$$

$$vc0 = A_0 \cdot \sin(\theta + 2/3 \cdot \pi) \quad . \quad . \quad . \quad (1)$$

The command value correction unit 43 makes a correction for improvement of voltage utilization ratio or the like to the three-phase voltage command values va0, vb0, and vc0. In the following description, a case where as illustrated in FIG.

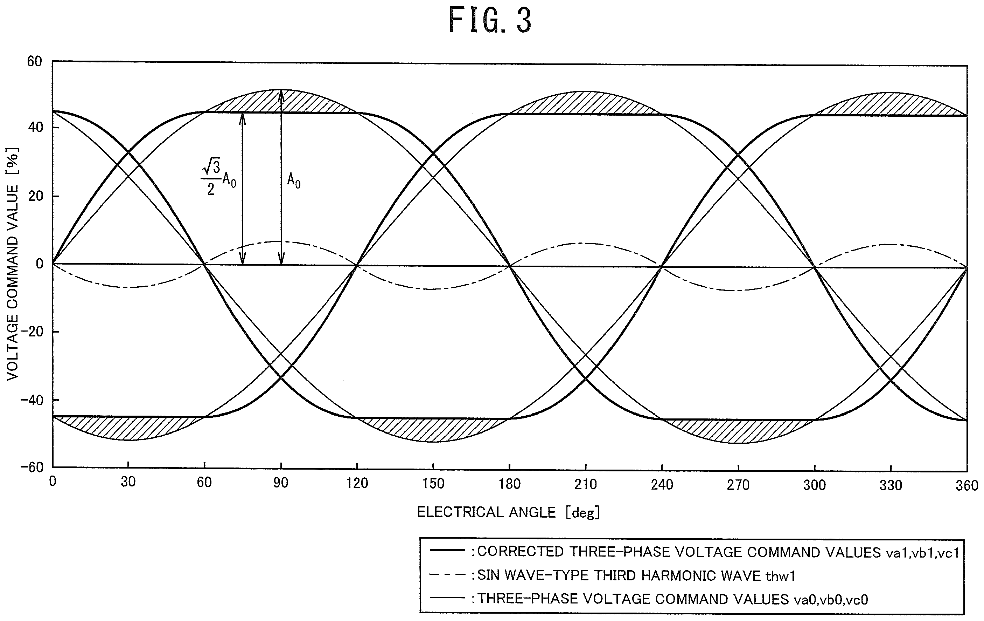

3, correction in which a third harmonic wave thw1 of a SIN wave type is subtracted from the three-phase voltage command values va0, vb0, and vc0 is performed and corrected three-phase voltage command values va1, vb1, and vc1 are thereby generated, respectively is describe as an example. As the third harmonic wave thw1 of a SIN wave type, for example, a third harmonic wave that has the same waveform as a waveform obtained by synthesizing excesses within the three-phase voltage command values va0, vb0, and vc0 that exceed a value of $A_0 \cdot \sqrt{3}/2$, which is $\sqrt{3}/2$ times the amplitude $A_0$ of the three-phase voltage command values va0, vb0, and vc0, with one another can be employed. In FIG. 3, excesses where the magnitudes of the three-phase voltage command values va0, vb0, and vc0 exceed the value of $A_0 \cdot \sqrt{3}/2$, which is $\sqrt{3}/2$ times the amplitude $A_0$ of the three-phase voltage command values va0, vb0, and vc0 are illustrated by hatching. Subtracting the third harmonic wave thw1 from the three-phase voltage command values va0, vb0, and vc0 enables waveforms in ranges where the three-phase voltage command values va0, vb0, and vc0 exceed $A_0 \cdot \sqrt{3}/2$ to be flattened. That is, the command value correction unit 43 subtracts excesses exceeding a value of $\sqrt{3}/2$ times the amplitude $A_0$ of the three-phase voltage command values va0, vb0, and vc0 from the three-phase voltage command values va0, vb0, and vc0, as expressed by the equation (2) below and thereby generates the corrected three-phase voltage command values va1, vb1, and vc1, respectively.

$$va1 = va0 - thw1, \quad vb1 = vb0 - thw1, \quad vc1 = vc0 - thw1 \quad . \quad . \quad . \quad (2)$$

The PWM control unit 44 generates, based on the corrected three-phase voltage command values va1, vb1, and vc1, gate signals (hereinafter, also referred to as "PWM signals") to drive the high-potential-side switching elements Qah, Qbh, and Qch and the low-potential-side switching elements Qal, Qbl, and Qcl. Specifically, first, the PWM control unit 44, by adding 50% points to the corrected three-phase voltage command values va1, vb1, and vc1, calculates target duty ratios Da, Db, and Dc that have amplitude $A_1$ of a predetermined magnitude and that vary at most from 0% to 100% with 50% as a vibration center value, as expressed by the equation (3) below. The amplitude $A_1$ of the target duty ratios Da, Db, and Dc is a value obtained by multiplying the amplitude $A_0$ of the three-phase voltage command values va0, vb0, and vc0 by $\sqrt{3}/2$, as expressed by the equation (4) below.

$$Da = va1 + 50\%, \quad Db = vb1 + 50\%, \quad Dc = vc1 + 50\% \quad . \quad . \quad . \quad (3)$$

$$A_1 = A_0 \cdot \sqrt{3}/2 \quad . \quad . \quad . \quad (4)$$

Although the target duty ratios Da, Db, and Dc on which the third harmonic wave is superimposed are not sine wave signals, a difference between a vibration center value of 50% and a maximum value ($\geq 50\%$) is defined as the amplitude ($A_1$) of the target duty ratios Da, Db, and Dc. The same applies to variations described below.

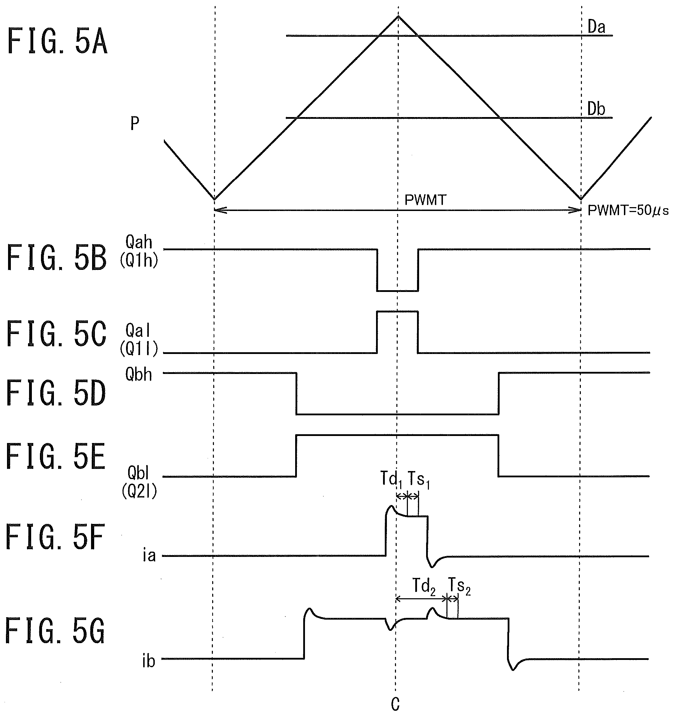

Succeedingly, the PWM control unit 44 compares the target duty ratios Da, Db, and Dc with a PWM carrier wave P that is a triangular wave signal, as illustrated in FIG. 5A and generates PWM signals that, in sections in which the PWM carrier wave P exceeds the target duty ratios Da, Db, and Dc, turn off the high-potential-side switching elements Qah, Qbh, and Qch and turn on the low-potential-side switching elements Qal, Qbl, and Qcl, respectively, as illustrated in FIGS. 5B, 5C, 5D, and 5E. Conversely, the PWM control unit 44 generates PWM signals that, in sections in which the PWM carrier wave P falls below the target duty ratios Da, Db, and Dc, turn on the high-potential-side switching elements Qah, Qbh, and Qch and turn off the low-potential-side switching elements Qal, Qbl, and Qcl, respectively, as illustrated in FIGS. 5A to 5E. The PWM signals are input to the inverter 34.

Note that in FIGS. 5A to 5G, illustrations of the target duty ratio Dc and a PWM signal with respect to the phase C are omitted.

In an actual circuit, a transient response (including rising delay and falling delay) is generated at the time of turning on and off of a pulse. In order to avoid simultaneous turning-on of a high-potential-side switching element and a low-potential-side switching element due to a transient response, dead time is set in a PWM signal. In FIGS. 5A to 5G, to simplify the description, the PWM signals are illustrated as signals having ideal waveforms without illustrating dead time or delay.

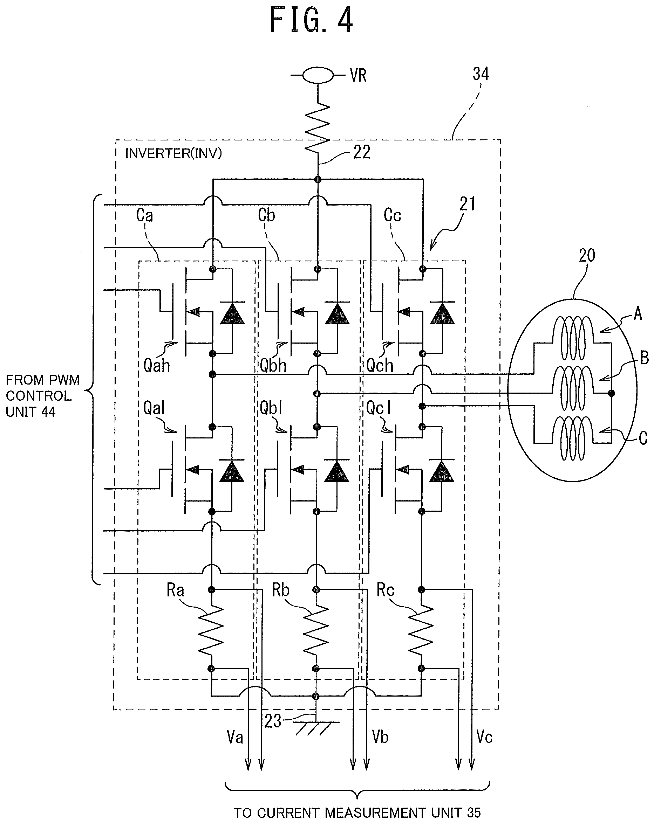

The inverter 34 is driven by the gate signals (PWM signals) input from the PWM control unit 44 and supplies the motor 20 with currents to bring the q-axis deviation current $\Delta q$ and the d-axis deviation current $\Delta d$ to "0". Specifically, as illustrated in FIG. 4, the inverter 34 includes a bridge circuit 21 formed by connecting in parallel phase circuits Ca, Cb, and Cc that are formed with respect to the phases A, B, and C of the motor 20, respectively. The bridge circuit 21 is connected between a power supply line 22 that is connected to a DC power source VR (for example, a positive electrode side of the battery 11) and that is supplied with DC power and a ground line 23. The phase circuits Ca, Cb, and Cc in the bridge circuit 21 include in series the high-potential-side switching elements Qah, Qbh, and Qch that are arranged on the power supply line 22 side (high potential side), the low-potential-side switching elements Qal, Qbl, and Qcl that are arranged on the ground line 23 side (low potential side) of the high-potential-side switching element Qah, Qbh, and Qch, and shunt resistors Ra, Rb, and Rc that are arranged on the ground line 23 side (low potential side) of the the low-potential-side switching elements Qal, Qbl, and Qcl, respectively. As the high-potential-side switching elements Qah, Qbh, and Qch and the low-potential-side switching elements Qal, Qbl, and Qcl, for example, MOSFETs can be employed.

Drains of the high-potential-side switching elements Qah, Qbh, and Qch are connected to the power supply line 22. In addition, sources of the high-potential-side switching elements Qah, Qbh, and Qch are connected to drains of the low-potential-side switching elements Qal, Qbl, and Qcl, respectively. In addition, sources of the low-potential-side switching elements Qal, Qbl, and Qcl are connected to the ground line 23 via the shunt resistors Ra, Rb, and Rc, respectively. Each of the high-potential-side switching elements Qah, Qbh, and Qch and the low-potential-side switching elements Qal, Qbl, and Qcl is, upon input of a gate signal (PWM signal) generated by the PWM control unit 44 to the gate, turned on or off between the source and the drain. Connection points between the high-potential-side switching elements Qah, Qbh, and Qch and the low-potential-side switching elements Qal, Qbl, and Qcl are connected to coils of the phases A, B, and C of the motor 20, respectively.

The shunt resistors Ra, Rb, and Rc are arranged on the low potential side of the low-potential-side switching elements Qal, Qbl, and Qcl and currents (the phase currents ia, ib, and ic) supplied from the bridge circuit 21 to the phases A, B, and C of the motor 20 flow through the shunt resistors Ra, Rb, and Rc, respectively. A connection point between each of the low-potential-side switching elements Qah, Qbh, and Qch and a corresponding one of the shunt resistors Ra, Rb, and Rc is connected to the phase current measurement unit 35. To the phase current measurement unit 35, voltage drops va, vb, and vc across the shunt resistors Ra, Rb, and Rc are input.

The phase current measurement unit 35 measures currents (the phase currents ia, ib, and ic) flowing through the shunt resistors Ra, Rb, and Rc, respectively in the first measurement period $Ts_1$ or a second measurement period $Ts_2$ that is started later than the first measurement period $Ts_1$. The first measurement period $Ts_1$ is a period during which the high-potential-side switching element Qah, Qbh, or Qch to the gate of which a PWM signal generated based on a maximum target duty ratio (hereinafter, also referred to as "maximum duty D1") among the target duty ratios Da, Db, and Dc is input (hereinafter, also referred to as "first switching element Q1h") is in an off state as illustrated in FIG. 5B and is a period for performing measurement of the phase currents ia, ib, and ic that is, as illustrated in FIG. 5F, set between a timing at which a noise occurring when the first switching element Q1h is switched from an on state to the off state (a noise on the left-hand side in FIG. 5F) has converged to zero and a timing at which the low-potential-side switching element Qal, Qbl, or Qcl corresponding to the first switching element Q1h (hereinafter, also referred to as "first switching element Q1l") is switched from an on state to an off state. Alternatively, the first measurement period $Ts_1$ is a period during which the first switching element Q1l is in the on state and is a period that is set between a timing at which a noise occurring when the first switching element Q1l is switched from the off state to the on state has converged to zero and a timing at which the first switching element Q1l is switched from the on state to the off state. For example, as the first measurement period $Ts_1$, a period that is started a predetermined delay time $Td_1$ later than a center C of the PWM signal (in other words, a timing at which the PWM carrier wave P reaches a peak value) can be employed.

In addition, the second measurement period $Ts_2$ is a period for performing measurement of phase currents of at least two phases among the phase currents ia, ib, and ic that is, as illustrated in FIG. 5G, set between a timing at which a noise having occurred in an interlocked manner with a noise on the right-hand side in FIG. 5F (a noise occurring when the first switching element Q1h is switched from the off state to the on state or a noise occurring when the first switching element Q1l is switched from the on state to the off state) has converged to zero and a timing at which the low-potential-side switching element Qal, Qbl, or Qcl to the gate of which a PWM signal generated based on a second-largest target duty ratio Da, Db, or Dc among the target duty ratios Da, Db, and Dc (hereinafter, also referred to as "intermediate duty D2") is input (hereinafter, also referred to as "second switching element Q2l") is switched from an on state to an off state. For example, as the second measurement period $Ts_2$, a period that is started a predetermined delay time $Td_2 (>Td_1)$ later than the center C of the PWM signal can be employed. In FIGS. 5A to 5G, a case where the high-potential-side switching element Qah in the phase circuit Ca is the first switching element Q1h, the low-potential-side switching element Qal in the phase circuit Ca is the first switching element Q1l, and the low-potential-side switching element Qbl in the phase circuit Cb is the second switching element Q2l is illustrated as an example.

FIGS. 5A to 5G are diagrams illustrative of a relationship among the carrier wave of the PWM signals, the gate voltage, and the PWM signals. FIG. 5A is a diagram illustrative of the PWM carrier wave P, FIG. 5B is a diagram illustrative of a PWM signal supplied to the high-potential-side switching element Qah (the first switching element Q1h), and FIG. 5C is a diagram illustrative of a PWM signal supplied to the low-potential-side switching element Qal. In addition, FIG. 5D is a diagram illustrative of a PWM signal supplied to the high-potential-side switching element Qbh, and FIG. 5E is a diagram illustrative of a PWM signal supplied to the low-potential-side switching element Qbl (the second switching element Q2l). In addition, FIG. 5F is a diagram illustrative of the phase current ia flowing through the phase circuit Ca, and FIG. 5G is a diagram illustrative of the phase current ib flowing through the phase circuit Cb.

The phase current measurement unit 35 includes a measurement timing generation unit 46 and a measurement execution unit 47.

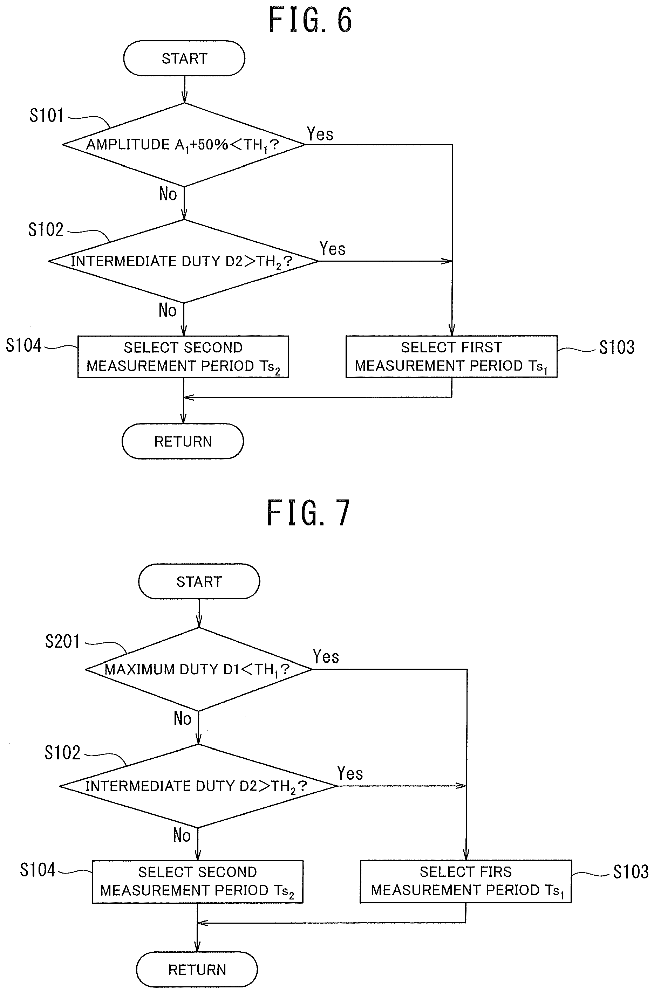

The measurement timing generation unit 46, by performing the timing generation processing illustrated in FIG. 6, selects either the first measurement period $Ts_1$ or the second measurement period $Ts_2$ as a measurement period in which measurement of the phase currents ia, ib, and ic is performed and continuously outputs a sampling signal S to the measurement execution unit 47 from a start to an end of the selected measurement period. FIG. 6 is a diagram illustrative of a flowchart of the timing generation processing.

The measurement execution unit 47 measures the phase currents ia, ib, and ic, based on the voltage drops va, vb, and vc across the shunt resistors Ra, Rb, and Rc, respectively. The measurement of the phase currents ia, ib, and ic is performed while the measurement timing generation unit 46 is outputting the sampling signal S. Because of this configuration, during the first measurement period $Ts_1$ or the second measurement period $Ts_2$ determined by the measurement timing generation unit 46, the measurement of the phase currents ia, ib, and ic is performed. Note that when one phase current among the phase currents ia, ib, and ic cannot be measured, the phase current that cannot be measured is estimated based on the other two phase currents. As an estimation method of the phase current, for example, a method for estimating the phase current based on Kirchhoff's law can be employed. The phase currents ia, ib, and ic are input to the three-phase/two-phase conversion unit 38. In addition, as the measurement execution unit 47, for example, an analog-to-digital (AD) converter can be employed.

[1-2 Timing Generation Processing]

Next, the timing generation processing that the measurement timing generation unit 46 performs will be described.

The timing generation processing is, for example, performed in each cycle (for example, 50 $\mu$s) of the PWM signals. Note that the performance timing of the timing generation processing may be set in such a way that the timing generation processing is performed every two or more cycles.

When the timing generation processing is performed, first, in step S101, the measurement timing generation unit 46 calculates, based on the three-phase voltage command values va0, vb0, and vc0 generated by the two-phase/three-phase conversion unit 42, the amplitude $A_0$ of the three-phase voltage command values va0, vb0, and vc0 in accordance with the equation (5) below, as illustrated in FIG. 6. Note that it may be configured such that the amplitude $A_0$ is calculated based on the q-axis voltage command value vq and the d-axis voltage command value vd calculated by the PI control unit 41 in accordance with the equation (6) below.

$$A_0 = (2/3)^{1/2} \cdot (va0^2 + vb0^2 + vc0^2)^{1/2} \quad . \quad . \quad . \quad (5)$$

$$A_0 = (vq^2 + vd^2)^{1/2} \quad . \quad . \quad . \quad (6)$$

Succeedingly, the measurement timing generation unit 46 calculates the amplitude $A_1$ of the target duty ratios Da, Db, and Dc, based on the calculated amplitude $A_0$ in accordance with the above-described equation (4). Succeedingly, the measurement timing generation unit 46 determines whether or not a value obtained by adding 50% points to the calculated amplitude $A_1$ (hereinafter, also referred to as "target duty ratio amplitude value ($A_1$+50%)") is less than the first threshold value $TH_1$. As the first threshold value $TH_1$, for example, a value that is a predetermined value smaller than a smaller duty ratio of a duty ratio at which a switching noise caused by the high-potential-side switching element Qah, Qbh, or Qch (the first switching element Q1h) and the low-potential-side switching element Qal, Qbl, or Qcl (the first switching element Q1l) to the gates of which a PWM signal generated based on the maximum duty D1 is input starts to overlap in the first measurement period $Ts_1$ and a duty ratio at which the first measurement period $Ts_1$ ends can be employed. For example, when Da>Db>Dc holds, a value that is a predetermined value smaller than a smaller duty ratio of a duty ratio corresponding to a limit value up to which a noise occurring when the high-potential-side switching element Qah, which is the first switching element Q1h, is switched from the on state to the off state or a noise occurring when the low-potential-side switching element Qal, which is the first switching element Q1l, is switched from the off state to the on state (a noise on the left-hand side in FIG. 5F) does not overlap and a duty ratio corresponding to a timing at which the first measurement period $Ts_1$ ends can be employed as the first threshold value $TH_1$, as illustrated in FIGS. 5B, 5C, and 5F. When the measurement timing generation unit 46 determines that the target duty ratio amplitude value ($A_1$+50%) is less than the first threshold value $TH_1$ (Yes), the process transitions to step S103. In contrast, when the measurement timing generation unit 46 determines that the target duty ratio amplitude value ($A_1$+50%) is greater than or equal to the first threshold value $TH_1$ (No), the process transitions to step S102.

Succeedingly, in step S102, the measurement timing generation unit 46 determines whether or not the intermediate duty D2 (in a broad sense, a "second duty ratio") is greater than the second threshold value $TH_2$. As the second threshold value $TH_2$, for example, a duty ratio at which a timing at which the low-potential-side switching element Qal, Qbl, or Qcl to the gate of which a PWM signal generated based on the intermediate duty D2 is input (the second switching element Q2l) is switched from the on state to the off state is later than the end of the second measurement period

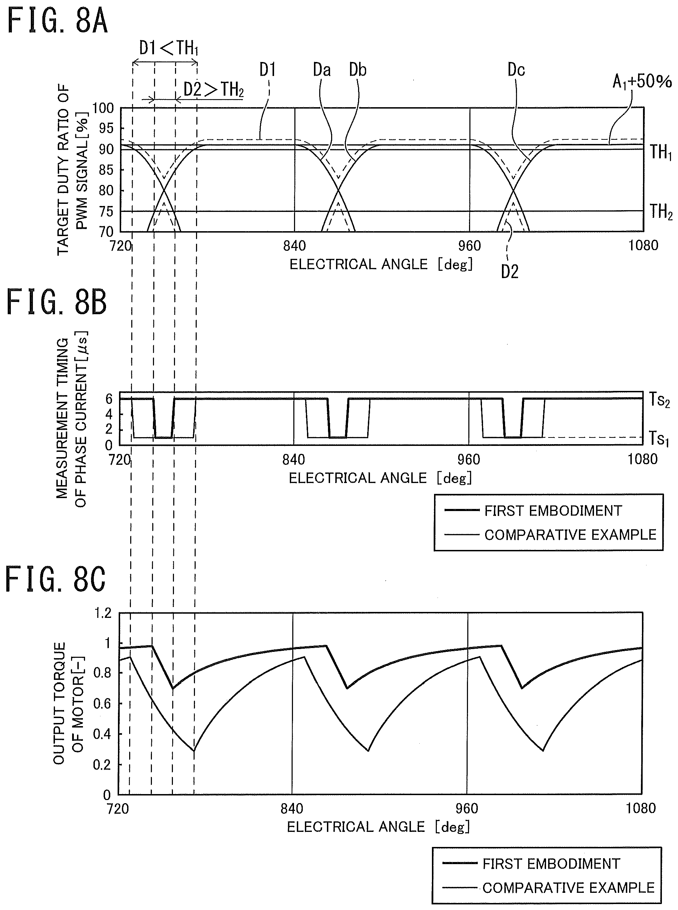

Ts$_2$ can be employed. For example, when Da>Db>Dc holds, a duty ratio corresponding to a limit value up to which the second measurement period Ts$_2$ ends before the low-potential-side switching element Qbl, which is the second switching element Q2l, is switched from the on state to the off state can be employed as the second threshold value TH$_2$, as illustrated in FIGS. 5E and 5G. In addition, a value that is a predetermined value smaller than a duty ratio corresponding to the limit value may be set as the second threshold value TH$_2$. In addition, in the first embodiment, the second threshold value TH$_2$ is set to a numerical value large enough to allow a relationship that when it is satisfied that the maximum duty D1 is greater than the first threshold value TH$_1$, it is satisfied that the intermediate duty D2 is less than the second threshold value TH$_2$ to be established, as illustrated in FIG. 8A. That is, as the second threshold value TH$_2$, a numerical value at which whenever step S101 in FIG. 6 results in "No", step S102 also results in "No" is employed. When the measurement timing generation unit 46 determines that the intermediate duty D2 is greater than the second threshold value TH$_2$ (Yes), the process transitions to step S103. In contrast, when the measurement timing generation unit 46 determines that the intermediate duty D2 is less than or equal to the second threshold value TH$_2$ (No), the process transitions to step S104.

In step S103, the measurement timing generation unit 46 selects the first measurement period Ts$_1$ as a measurement period in which the measurement of the phase currents ia, ib, and ic is performed. Specifically, the measurement timing generation unit 46 outputs a sampling signal S to the measurement execution unit 47 during the first measurement period Ts$_1$. Because of this configuration, the measurement execution unit 47 measures the phase currents ia, ib, and ic, based on the sampling signal S during the first measurement period Ts$_1$ and feeds back the measured phase currents ia, ib, and ic to the three-phase/two-phase conversion unit 38.

On the other hand, in step S104, the measurement timing generation unit 46 selects the second measurement period Ts$_2$ as a measurement period in which the measurement of the phase currents ia, ib, and ic is performed. Specifically, the measurement timing generation unit 46 outputs a sampling signal S to the measurement execution unit 47 during the second measurement period Ts$_2$. Because of this configuration, the measurement execution unit 47 measures the phase currents ia, ib, and ic, based on the sampling signal S during the second measurement period Ts$_2$ and feeds back the measured phase currents ia, ib, and ic to the three-phase/two-phase conversion unit 38.

As an electronic control unit 30 (ECU 30) of a comparative example, for example, a configuration in which, in place of step S101 in the timing generation processing illustrated in FIG. 6, whether or not the maximum duty D1 is less than the first threshold value TH$_1$ is determined, as illustrated in step S201 in FIG. 7 is now considered. When such a configuration is employed, the first measurement period Ts$_1$ is selected when D1 is less than the first threshold value TH$_1$ and the second measurement period Ts$_2$ is selected when D1 is greater than or equal to the first threshold value TH$_1$, as illustrated in FIG. 8B. However, when, for example, the measurement of the phase currents ia, ib, and ic is performed in the second measurement period Ts$_2$, a phase shift occurs among the measured phase currents ia, ib, and ic and a detection result of the q-axis current iq becomes small, compared with a case where the measurement is performed in the first measurement period Ts$_1$. Thus, such q-axis current iq being fed back causes the q-axis deviation current $\Delta$q to increase, a larger amount of q-axis current to flow through the motor 20, and output torque of the motor 20 to increase. Therefore, in association with switching between the first measurement period Ts$_1$ and the second measurement period Ts$_2$, the output torque of the motor 20 varies as illustrated in FIG. 8C, and there is a possibility that operation noise and vibration are generated in the electric power steering device 100 on which the motor 20 is mounted. FIGS. 8A to 8C are diagrams illustrative of a relationship among the target duty ratios Da, Db, and Dc of the PWM signals, the measurement timing of the phase currents ia, ib, and ic, and the output torque of the motor 20 in the electronic control unit 30. Since the output torque changes due to a target q-axis current value, the magnitude of a phase shift, or the like, the output torque of the motor 20 is normalized and torque when a phase shift occurs among the measured phase currents ia, ib, and ic is set to 1 and torque when there is no phase shift among the measured phase currents ia, ib, and ic is set to 0, in FIG. 8C.

For example, considering an overlapping period of switching noise, it is considered that a gap between the first measurement period Ts$_1$ and the second measurement period Ts$_2$ is approximately 3 $\mu$s. When it is assumed that the number of motor pole pairs is 4 and the number of motor revolutions is 3000 rpm, the gap of 3 $\mu$s produces an angle difference of 0.216° in a motor electrical angle. In addition, when it is assumed that the q-axis current is 70 A, the d-axis current is 71.4 A, a torque constant is 0.046 Nm/A, and a gear ratio is 20.5, the angle difference of 0.216° produces a deviation of 0.27 A in the q-axis current (q-axis deviation current $\Delta$q) and a torque difference of 0.26 Nm in the steering shaft 2. The torque variation of 0.26 Nm excites a motor housing and a mechanical section and causes the driver to feel the excitation of the motor housing and the mechanical section as an operation sound. Note that since a steering velocity of 878 deg/s (a numerical value when the number of motor revolutions is 3000 rpm and the gear ratio is 20.5) is high, an offset of 0.26 Nm does not cause the driver to feel heaviness or lightness of the steering force. In addition, since a control system outputs a command value correcting the heaviness or lightness of the steering force according to the steering torque Th, it is considered that the heaviness or lightness is reduced to a level causing no problem.

In contrast, the electronic control unit 30 according to the first embodiment is configured to perform the measurement of the phase currents ia, ib, and ic in the first measurement period Ts$_1$ when the target duty ratio amplitude value (A$_1$+50%), which is a value obtained by adding 50% points to the amplitude A$_1$ of the target duty ratios Da, Db, and Dc expressed by the equation (4), is less than the first threshold value TH$_1$ (A$_1$+50%<TH$_1$) or when the target duty ratio

amplitude value ($A_1$+50%) is greater than or equal to the first threshold value $TH_1$ ($A_1$+50%$\geq TH_1$) and the intermediate duty D2 (the second duty ratio), which is the second-largest target duty ratio Da, Db, or Dc among the target duty ratios Da, Db, and Dc, is greater than the second threshold value $TH_2$ (D2>$TH_2$). In addition, the electronic control unit 30 is configured to perform the measurement of the phase currents ia, ib, and ic in the second measurement period $Ts_2$ when the target duty ratio amplitude value ($A_1$+50%) is greater than or equal to the first threshold value $TH_1$ ($A_1$+50%$\geq TH_1$) and the intermediate duty D2 is less than or equal to the second threshold value $TH_2$ (D2$\leq TH_2$).

Because of this configuration, as illustrated in FIG. 8B, when the target duty ratio amplitude value ($A_1$+50%) is greater than or equal to the first threshold value $TH_1$ ($A_1$+50%$\geq TH_1$), the first measurement period $Ts_1$ is selected when the intermediate duty D2 is greater than the second threshold value $TH_2$ (D2>$TH_2$) and the second measurement period $Ts_2$ is selected when the intermediate duty D2 is less than or equal to the second threshold value $TH_2$ (D2$\leq TH_2$). In this configuration, as illustrated in FIG. 8A, a range of electrical angle in which D2>$TH_2$ holds is narrower than a range of electrical angle in which D1<$TH_1$ holds. Thus, the electronic control unit 30 according to the first embodiment is capable of making a period in which the first measurement period $Ts_1$ is selected shorter than the above-described comparative example. Therefore, the period in which the first measurement period $Ts_1$ is selected becoming short causes a period in which the output torque of the motor 20 is reduced to be short. Because of this configuration, since, compared with the electronic control unit 30 in the above-described comparative example, the electronic control unit 30 according to the first embodiment is configured such that when the measurement period is switched from the second measurement period $Ts_2$ to the first measurement period $Ts_1$, the measurement period is switched to the second measurement period $Ts_2$ again before the output torque of the motor 20 becomes sufficiently small, as illustrated in FIG. 8C, a variation range of the output torque of the motor 20 becomes small and operation noise and vibration of the electric power steering device 100 can be suppressed.

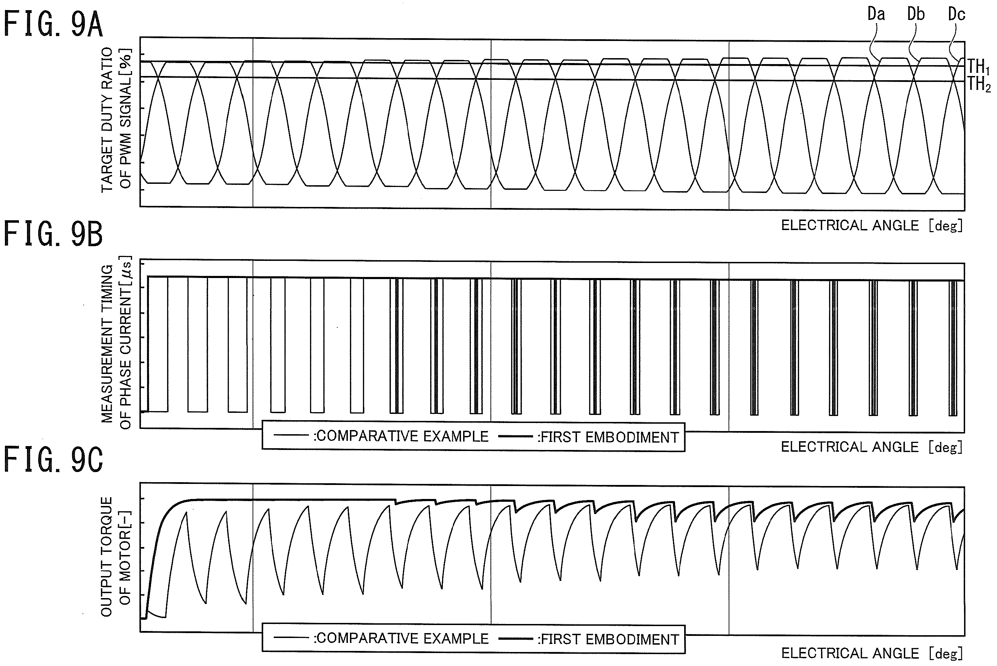

Simulation of the output torque of the motor 20 was performed as an example, and simulation results illustrated in FIGS. 9A to 9C were obtained. FIGS. 9A to 9C are simulation results when it is assumed that a start time of the first measurement period $Ts_1$ from the center C of a PWM signal is 1 $\mu$s, a convergence period of noise is 2 $\mu$s, a start time of the second measurement period $Ts_2$ from the center C of the PWM signal is 3.75 $\mu$s, the first threshold value $TH_1$ is 95%, and the second threshold value $TH_2$ is 84%. From FIGS. 9A to 9C, it is revealed that in the electronic control unit 30 according to the first embodiment, a variation range of the output torque of the motor 20 becomes sufficiently small. In FIGS. 9A to 9C, a case where the amplitude $A_1$ of the target duty ratios gradually increases is illustrated as an example.

[1-3 Variation]

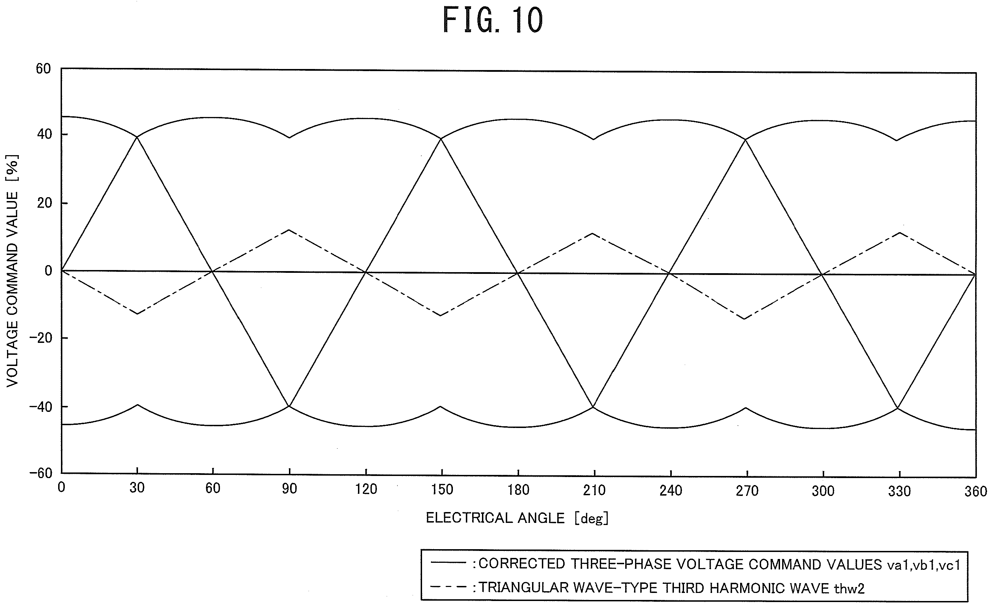

(1) Note that although in the first embodiment, an example in which the command value correction unit 43 subtracts the third harmonic wave thw1 of a SIN wave type from each of the three-phase voltage command values va0, vb0, and vc0 was described, the present invention may have another configuration. For example, it may be configured such that as illustrated in FIG. 10, correction in which a third harmonic wave thw2 of a triangular wave type is subtracted from each of the three-phase voltage command values va0, vb0, and vc0 is performed and the corrected three-phase voltage command values va1, vb1, and vc1 are thereby generated. As the third harmonic wave thw2 of a triangular wave type, for example, a third harmonic wave that has the same waveform as an average value of the voltage command value va0, vb0, or vc0 of a maximum phase having a maximum voltage command value among the three phases A, B, and C and the voltage command value va0, vb0, or vc0 of a minimum phase having a minimum voltage command value thereamong, as expressed by the equation (7) below can be employed.

That is, the command value correction unit 43 subtracts an average value of the voltage command value va0, vb0, or vc0 of the maximum phase having the maximum voltage command value among the three phases A, B, and C and the voltage command value va0, vb0, or vc0 of the minimum phase having the minimum voltage command value thereamong from each of the three-phase voltage command values va0, vb0, and vc0 and thereby generates the corrected three-phase voltage command values va1, vb1, and vc1. By subtracting the third harmonic wave thw2 of a triangular wave type from the three-phase voltage command values va0, vb0, and vc0, peaks of the waveforms of three-phase voltage command values va0, vb0, and vc0 can be depressed.

```
va1=va0-thw2, vb1=vb0-thw2, vc1=vc0-thw2

thw2=(MAX(va0, vb0, vc0)+MIN(va0, vb0, vc0))/2 . . .

(7)
```

In this case, the PWM control unit 44 adds 50% points to the corrected three-phase voltage command values va1, vb1, and vc1 and thereby calculates the target duty ratios Da, Db, and Dc, respectively, as expressed by the equation (8) below. In addition, the measurement timing generation unit 46 uses, as the target duty ratio amplitude value ($A_1$+50%) to be compared with the first threshold value $TH_1$, a value obtained by adding 50% points to a value obtained by multiplying the amplitude $A_0$ of the three-phase voltage command values va0, vb0, and vc0 by √3/2, as expressed by the equation (9) below.

$$Da=va1+50\%, \quad Db=vb1+50\%, \quad Dc=vc1+50\% \quad . . . \quad (8)$$

$$A_1+50\%=A_0 \cdot \sqrt{3}/2+50\% \quad . . . \quad (9)$$

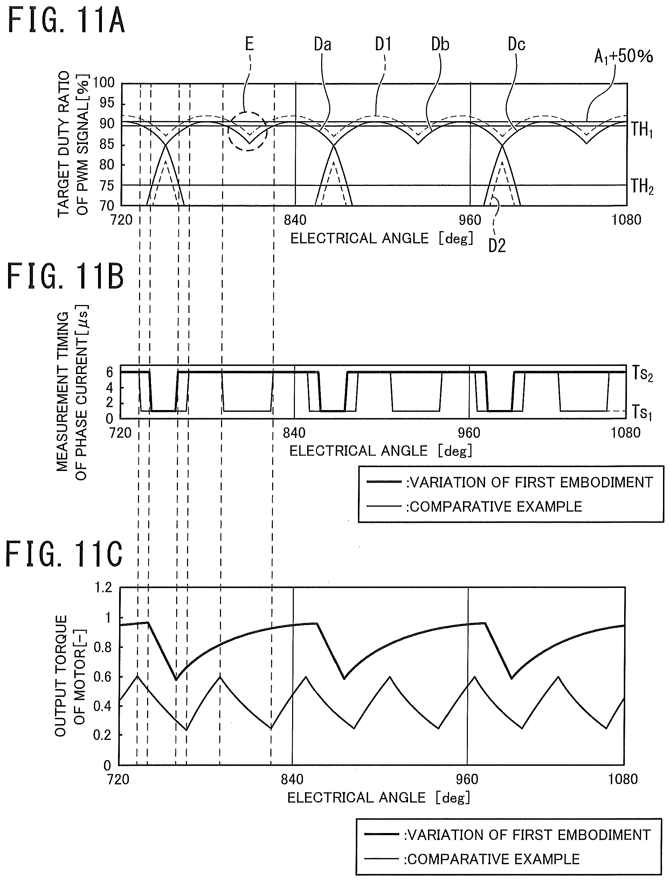

As an electronic control unit 30 (ECU 30) of a comparative example, for example, a configuration in which, in place of step S101 in the timing generation processing illustrated in FIG. 6, whether or not the maximum duty D1 is less than the first threshold value $TH_1$ is determined, as illustrated in step S201 in FIG. 7 is now considered. In the case where such a configuration is employed, when the third harmonic wave thw2 of a triangular wave type is used, there is a possibility that at a depressed portion (a depressed portion E in FIG. 11A) formed by a peak of the waveform being depressed, a relationship that D1 is less than the first threshold value $TH_1$ is established and the first measurement period $Ts_1$ is selected, as illustrated in FIG. 11B. As a result, there is a possibility that the number of switches between the first measurement period $Ts_1$ and the second measurement period $Ts_2$ increases.

In addition, in the comparative example, as illustrated in FIG. 11C, the output torque of the motor 20 vibrates in an electrical angle 6th-order vibration mode. There is a possibility that the electrical angle 6th-order vibration causes a problem in the electric power steering device 100. In particular, there is a possibility that a problem occurs when the electrical angle 6th-order vibration is superimposed on mechanical vibration.

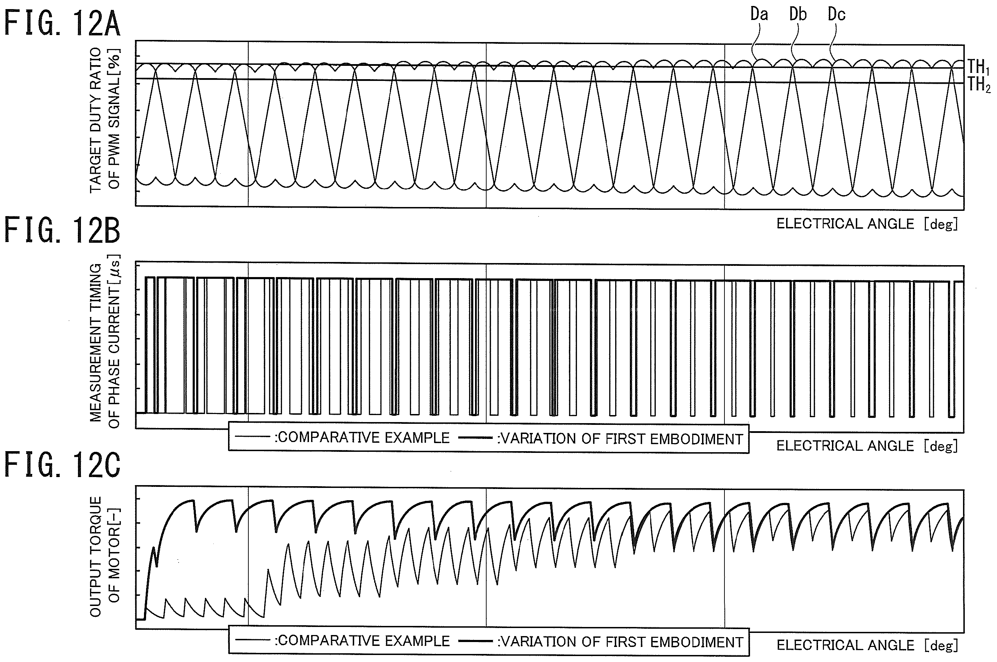

In contrast, in the electronic control unit 30 according to the present variation, since the phase current measurement unit 35 compares the target duty ratio amplitude value ($A_1$+50%) with the first threshold value $TH_1$, the first measurement period $Ts_1$ is not selected in a depressed portion (the depressed portion E in FIG. 11A) formed by a peak of the waveform being depressed, as illustrated in FIG. 11B. Therefore, in one electrical angle period, the number of switches between the first measurement period $Ts_1$ and the second measurement period $Ts_2$ is half the number of switches in the comparative example, the number of variations of the output torque of the motor 20 is half the number of variations in the comparative example, and operation noise and vibration of the electric power steering device 100 can be suppressed. Simulation of the output torque of the motor 20 was performed as an example, and simulation results illustrated in FIGS. 12A to 12C were obtained. FIGS. 12A to 12C are simulation results when it is assumed that the start time of the first measurement period $Ts_1$ from the center C of a PWM signal is 1 μs, the convergence period of noise is 2 μs, the start time of the second measurement period $Ts_2$ from the center C of the PWM signal is 3.75 μs, the first threshold value $TH_1$ is 95%, and the second threshold value $TH_2$ is 84%. From FIGS. 12A to 12C, it is revealed that in the electronic control unit 30 according to the present variation, the number of variations of the output torque of the motor 20 is halved.

In addition, in the electronic control unit 30 according to the present variation, since the number of variations of the output torque of the motor 20 is halved, no electrical angle 6th-order vibration is caused to occur, as illustrated in FIG. 11C. Note that in FIGS. 12A to 12C, a case where the amplitude $A_1$ of the target duty ratios gradually increases is illustrated as an example.

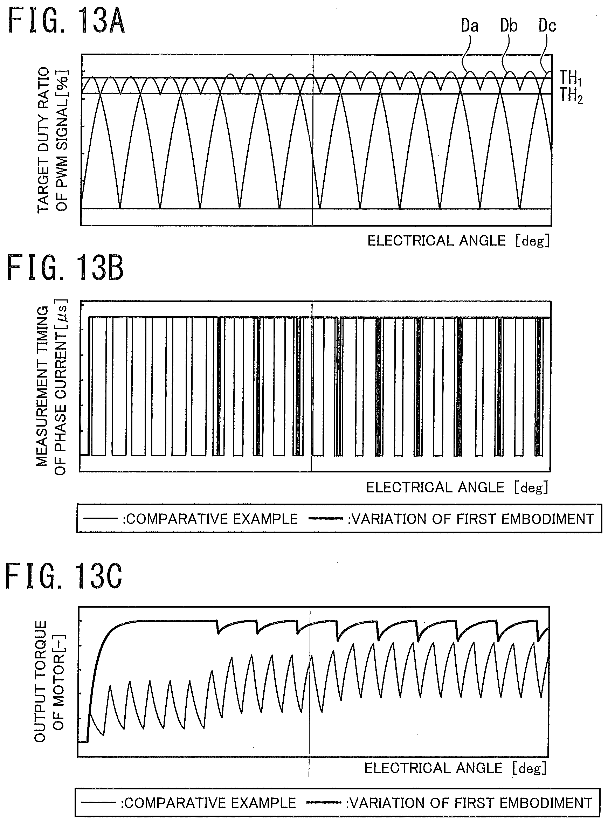

(2) In addition, for example, it may be configured such that as illustrated in FIGS. 13A to 13C, the command value correction unit 43 performs correction of a type in which minimum duty values are fixed to 0% on the three-phase voltage command values va0, vb0, and vc0 and thereby generates the corrected three-phase voltage command values va1, vb1, and vc1. FIGS. 13A to 13C are simulation results when it is assumed that the start time of the first measurement period $Ts_1$ from the center C of a PWM signal is 1 μs, the convergence period of noise is 2 μs, the start time of the second measurement period $Ts_2$ from the center C of the PWM signal is 3.75 μs, the first threshold value $TH_1$ is 95%, and the second threshold value $TH_2$ is 84%. In the correction of a type in which minimum duty values are fixed to 0%, the command value correction unit 43 subtracts the voltage command value va0, vb0, or vc0 of the minimum phase having the minimum voltage command value va0, vb0, or vc0 among the three phases A, B, and C from the three-phase voltage command values va0, vb0, and vc0 and thereby generates the corrected three-phase voltage command values va1, vb1, and vc1, respectively, as expressed by the equation (10) below. Because of this configuration, it is possible to prevent the target duty ratios Da, Db, and Dc from becoming a value too large to allow the phase currents ia, ib, and ic to be measured, and the phase currents ia, ib, and ic can be measured with good precision.

va1=va0-MIN(va0, vb0, vc0), vb1=vb0-MIN(va0, vb0, vc0), vc1=vc0-MIN(va0, vb0, vc0)          (10)

In this case, the PWM control unit 44 calculates the corrected three-phase voltage command values va1, vb1, and vc1 as the target duty ratios Da, Db, and Dc, respectively, as expressed by the equation (11) below. In addition, the measurement timing generation unit 46 uses, as the target duty ratio amplitude value ($A_1$+50%) to be compared with the first threshold value $TH_1$, a value obtained by doubling the amplitude $A_0$ of the three-phase voltage command values va0, vb0, and vc0, as expressed by the equation (12) below.

$$\mathtt{Da=va1, \ Db=vb1, \ Dc=vc1 \ . \ . \ . \ (11)}$$

$$\mathtt{A_1+50\%=A_0 \cdot 2 \ . \ . \ . \ (12)}$$

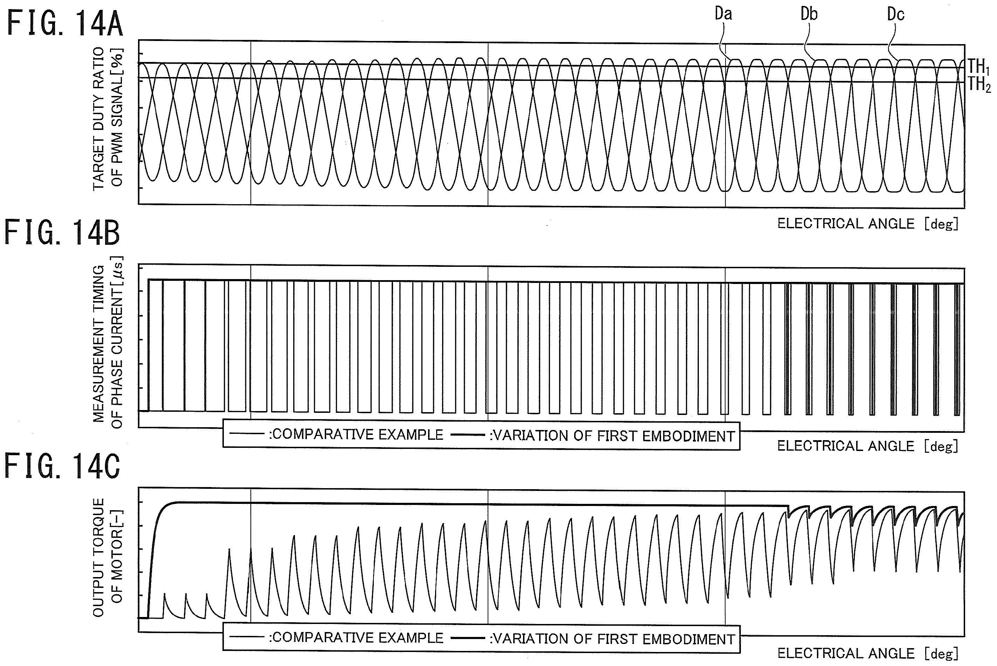

(3) In addition, for example, it may be configured such that as illustrated in FIGS. 14A to 14C, the command value correction unit 43 performs correction to cut off only excesses exceeding a certain range on the three-phase voltage command values va0, vb0, and vc0 and thereby generates the corrected three-phase voltage command values va1, vb1, and vc1, respectively. FIGS. 14A to 14C are simulation results when it is assumed that the start time of the first measurement period $Ts_1$ from the center C of a PWM signal is 1 $\mu$s, the convergence period of noise is 2 $\mu$s, the start time of the second measurement period $Ts_2$ from the center C of the PWM signal is 3.75 $\mu$s, the first threshold value $TH_1$ is 95%, and the second threshold value $TH_2$ is 84%. In the correction to cut off only excesses exceeding a certain range, the command value correction unit 43, as expressed by the equation (13) below, synthesizes excesses exceeding a predetermined value B, which is determined in advance, and cut off from respective ones of the three-phase voltage command values va0, vb0, and vc0 with one another and thereby generates a third harmonic wave thw3. In addition, the command value correction unit 43 subtracts the third harmonic wave thw3 from the three-phase voltage command values va0, vb0, and vc0 and thereby generates the corrected three-phase voltage command values va1, vb1, and vc1, respectively. Because of this configuration, it is possible to prevent the target duty ratios Da, Db, and Dc from becoming a value too large to allow the phase currents ia, ib, and ic to be measured, and the phase currents ia, ib, and ic can be measured with good precision.

$$\mathtt{va1=va0-thw3, \ vb1=vb0-thw3, \ vc1=vc0-thw3 \ . \ . \ . \ (13)}$$

In this case, the PWM control unit 44 adds 50% points to the corrected three-phase voltage command values va1, vb1, and vc1 and thereby calculates the target duty ratios Da, Db, and Dc, respectively, as expressed by the equation (14) below. In addition, the measurement timing generation unit 46 uses, as the target duty ratio amplitude value ($A_1$+50%) to be compared with the first threshold value $TH_1$, a value obtained by adding 50% points to a numerical value MIN($A_0$, B) that is a smaller one of the amplitude $A_0$ of the three-phase voltage command values va0, vb0, and vc0 and the predetermined value B, as expressed by the equation (15) below.

$$\mathtt{Da=va1+50\%, \ Db=vb1+50\%, \ Dc=vc1+50\% \ . \ . \ . \ (14)}$$

$$\mathtt{A_1+50\%=MIN(A_0, \ B)+50\% \ . \ . \ . \ (15)}$$

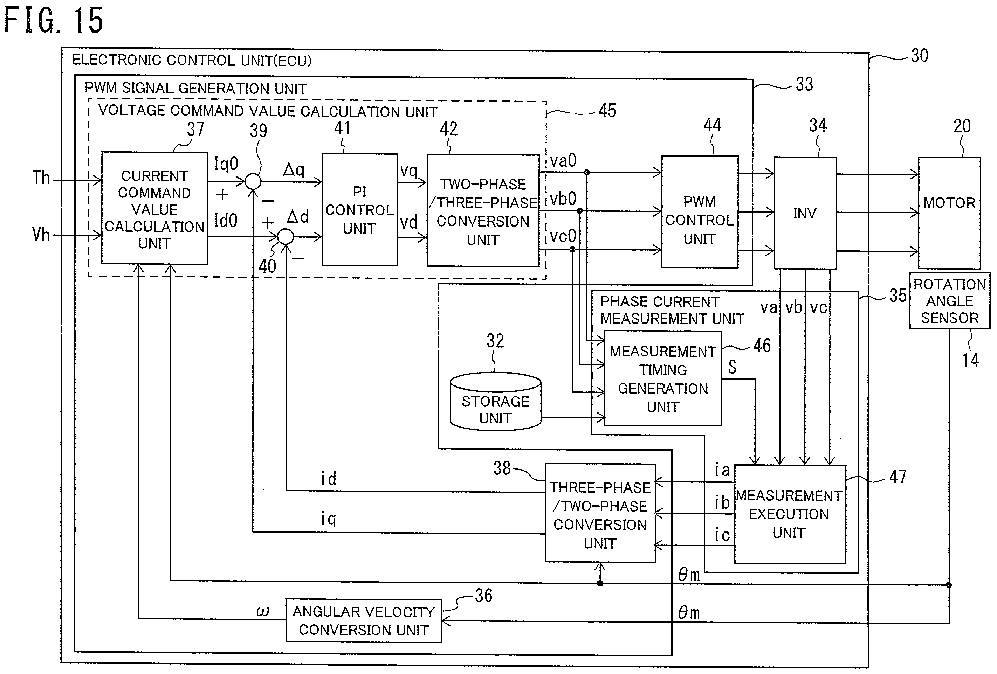

(4) In addition, for example, a configuration in which the command value correction unit 43 is omitted, as illustrated in FIG. 15 may be employed. In this case, the PWM control unit 44 adds 50% points to the three-phase voltage command values va0, vb0, and vc0 and thereby calculates the target duty ratios Da, Db, and Dc, respectively, as expressed by the equation (16) below. In addition, the measurement timing generation unit 46 uses, as the target duty ratio amplitude value ($A_1$+50%) to be compared with the first threshold value $TH_1$, a value obtained by adding 50% points to the amplitude $A_0$ of the three-phase voltage command values va0, vb0, and vc0, as expressed by the equation (17) below.

$$\mathtt{Da=va0+50\%, \ Db=vb0+50\%, \ Dc=vc0+50\% \ . \ . \ . \ (16)}$$

$$\mathtt{A_1+50\%=A_0+50\% \ . \ . \ . \ (17)}$$

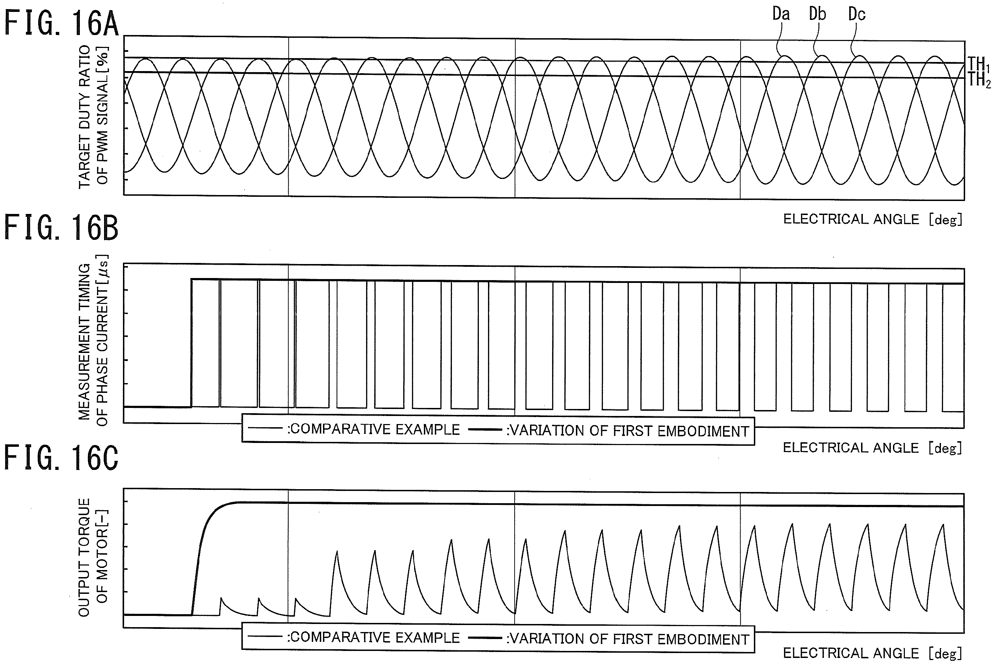

Simulation of the output torque of the motor 20 when the configuration in which the command value correction unit 43 is omitted is employed was performed, and simulation results illustrated in FIG. 16 was obtained. FIG. 16 is a simulation result when it is assumed that the start time of the first measurement period $Ts_1$ from the center C of a PWM signal is 1 $\mu$s, the convergence period of noise is 2 $\mu$s, the start time of the second measurement period $Ts_2$ from the center C of the PWM signal is 3.75 $\mu$s, the first threshold value $TH_1$ is 95%, and the second threshold value $TH_2$ is 84%.

(5) In addition, for example, it may be configured such that when the voltage command value va1, vb1, or vc1 that is the second largest among the corrected three-phase voltage command values va1, vb1, and vc1 (hereinafter, also referred to as "intermediate command value vm") is greater than or equal to a threshold value TH, the command value correction unit 43 subtracts a difference (vm-TH) between the intermediate command value vm and the above-described threshold value TH from the three-phase voltage command values va1, vb1, and vc1 and thereby generates the corrected three-phase voltage command values va1, vb1, and vc1 again, respectively. Because of this configuration, it is possible to prevent the target duty ratios Da, Db, and Dc from becoming a value too large to allow two phase currents of the phase currents ia, ib, and ic to be simultaneously measured, and the phase currents ia, ib, and ic can be measured with good precision. Further, as a target duty ratio amplitude value to be compared with the first threshold value $TH_1$, a value $(A_1-(vm-TH)+50\%)$ obtained by subtracting the difference (vm-TH) between the intermediate command value vm and the threshold value TH may be employed.

(6) In addition, although in the first embodiment, for simplification of description, an example in which no dead time in which both one of the high-potential-side switching elements Qah, Qbh, and Qch and a corresponding one of the low-potential-side switching elements Qal, Qbl, and Qcl are turned off is set was described, the present invention is not limited to the example. For example, a configuration in which to prevent both one of the high-potential-side switching elements Qah, Qbh, and Qch and a corresponding one of the low-potential-side switching elements Qal, Qbl, and Qcl from being turned on at the same time and a short-circuit from occurring, such dead time is set may be employed. When dead time is set, a configuration in which dead time compensation is performed may be employed. In this case, it is configured such that, for example, by adding three-phase dead time compensation values having a dead time compensation amount $\alpha$ as amplitude to the corrected three-phase voltage command values va1, vb1, and vc1 after the corrected three-phase voltage command values va1, vb1, and vc1 are calculated, the target duty ratios Da, Db, and Dc are calculated, respectively. Therefore, as the target duty ratio amplitude value to be compared with the first threshold value $TH_1$, a value $(A_1+\alpha+50\%)$ obtained by further adding the dead time compensation amount a is employed.

(7) In addition, the motor control device according to the present invention is not limited to the above-described embodiment, and various modification can be made without departing from the spirit and scope of the present invention.

For example, although in the first embodiment, the electric power steering device 100 was described by way of example as an application example of the motor control device according to the present invention, scope of application of the motor control device according to the present invention is not limited to the electric power steering device 100, and the motor control device according to the present invention can be applied to various types of mechanical devices using a motor control device.

FIG. 17 is a diagram illustrative of an overall configuration of a linear motion table device 200 to which the motor control device of the present invention is applied. As illustrated in FIG. 17, the linear motion table device 200 includes two linear guides 70 (linear motion guide device), a feed screw device 71, a table 72, and a base 73.

Each of the two linear guides 70 includes a guide rail 74, two sliders 75 (moving body), and a plurality of rolling elements (not illustrated). The guide rail 74 is fixed to the base 73. In addition, the guide rail 74 and each of the sliders 75 have raceway surfaces that form rolling paths for the rolling elements at positions facing each other. Both raceway surfaces extend along the longitudinal direction of the guide rail 74. Because of this configuration, each of the sliders 75 is configured to be linearly movable along the longitudinal direction of the guide rail 74 via the rolling elements rolling in the rolling paths while being loaded. The linear guides 70 are arranged at both ends in a direction perpendicular to a movement direction Y of the table 72 on the base 73. The guide rails 74 are arranged in parallel with the movement direction Y of the table 72.

The feed screw device 71 includes a screw shaft 76, a nut 77, and a polyphase motor 78. Rolling bearings are attached at both ends in the axial direction of the screw shaft 76, a housing 79 is fixed to an outer ring of each of the rolling bearings, and each of the housing 79 is fixed to the base 73. Because of this configuration, the screw shaft 76 is supported in a freely rotatable manner with respect to the base 73. The screw shaft 76 and the nut 77 have spiral grooves at positions facing each other and constitute a ball screw mechanism in which the spiral groove of the screw shaft 76 and the spiral groove of the nut 77 come into point contact with each other via balls. The feed screw device 71 is arranged between the two linear guides 70. The screw shaft 76 is arranged in parallel with the movement direction Y of the table 72. The polyphase motor 78 is coupled to one end in the axial direction of the screw shaft 76.

The table 72 is arranged above the two sliders 75 of each of the linear guides 70 and the nut 77 of the feed screw device 71, and is directly fixed to the sliders 75 and is fixed to the nut 77 via a bracket. That is, the two sliders 75 of each of the linear guides 70 and the nut 77 of the feed screw device 71 are fixed to one surface of the table 72.

In the linear motion table device 200, when the polyphase motor 78 is driven and the feed screw device 71 is operated, the screw shaft 76 rotates and the nut 77 linearly moves by the ball screw mechanism. The table 72 linearly moves in a direction parallel with the movement direction Y while being guided by the linear guides 70. In addition, an electronic control unit 80 (in a broad sense, a "motor control device") sets current command values to drive the polyphase motor 78 and, as with the electronic control unit 30 in the first embodiment, calculates voltage control command values Vref from the current command values and controls currents to be supplied to the polyphase motor 78.

(8) In addition, although in the first embodiment, for simplification of description, an example in which a process from calculation of the q-axis voltage command value vq and the d-axis voltage command value vd to calculation of the corrected three-phase voltage command values va1, vb1, and vc1 is expressed in a dimension of the duty ratio (%) was described, the present invention is not limited to the example. For example, the corrected three-phase voltage command values va1, vb1, and vc1 may be calculated from the q-axis voltage command value vq and the d-axis voltage command value vd in a dimension of voltage (V), and by converting the corrected three-phase voltage command values va1, vb1, and vc1 with a conversion factor calculated from power-supply voltage supplied to the inverter 34 and a dead time amount, the target duty ratios Da, Db, and Dc may be calculated. On this occasion, by likewise converting the amplitude $A_0$, the target duty ratio amplitude value is calculated.

Reference Signs List

| | |
|---|---|
| 1 | Steering wheel |
| 2 | Steering shaft |
| 3 | Reduction gear |
| 4a | Universal joint |
| 4b | Universal joint |
| 5 | Pinion rack mechanism |
| 5a | Pinion |
| 5b | Rack |
| 6a | Tie rod |
| 6b | Tie rod |
| 7a | Hub unit |
| 7b | Hub unit |
| 8L, 8R | Steered wheel |
| 9 | Torque sensor |
| 10 | Steering angle sensor |
| 11 | Battery |
| 12 | Ignition switch |
| 13 | Vehicle speed sensor |
| 14 | Rotation angle sensor |
| 20 | Motor |
| 21 | Bridge circuit |
| 22 | Power supply line |
| 23 | Ground line |
| 30 | Electronic control unit |
| 31 | Processor |
| 32 | Storage unit |
| 33 | PWM signal generation unit |
| 34 | Inverter |
| 35 | Phase current measurement unit |
| 36 | Angular velocity conversion unit |
| 37 | Current command value calculation unit |
| 38 | Three-phase/two-phase conversion unit |
| 39, 40 | Subtracter |
| 41 | PI control unit |
| 42 | Two-phase/three-phase conversion unit |
| 43 | Command value correction unit |
| 44 | PWM control unit |
| 45 | Voltage command value calculation unit |
| 46 | Measurement timing generation unit |
| 47 | Measurement execution unit |
| 70 | Linear guide |
| 71 | Feed screw device |
| 72 | Table |
| 73 | Base |
| 74 | Guide rail |
| 75 | Slider |
| 76 | Screw shaft |

77   Nut
78   Polyphase motor
79   Housing
80   Electronic control unit
100   Electric power steering device
200   Linear motion table device

**Claims**

1. A motor control device configured to control a polyphase motor (78) having three or more phases, the motor control device comprising:

  a bridge circuit (21) configured by connecting in parallel phase circuits each formed corresponding to one of phases of the polyphase motor (78) and including in series a high-potential-side switching element (Qah, Qbh, and Qch), a low-potential-side switching element (Qal, Qbl, and Qcl), and a shunt resistor (Ra, Rb, and Rc) arranged on a low potential side of the low-potential-side switching element (Qal, Qbl, and Qcl);
  a phase current measurement unit (35) configured to measure phase currents flowing through the shunt resistors (Ra, Rb, and Rc) in a first measurement period ($Ts_1$) or a second measurement period ($Ts_2$), the second measurement period ($Ts_2$) being started later than the first measurement period ($Ts_1$);
  a PWM signal generation unit (33) configured to, with respect to each phase of the polyphase motor (78), calculate, based on the phase current, a target duty ratio, the target duty ratio being a target duty ratio of a PWM signal to drive the high-potential-side switching element (Qah, Qbh, and Qch) and the low-potential-side switching element (Qal, Qbl, and Qcl), having amplitude of a predetermined magnitude, and varying at most from 0% to 100% with 50% as a vibration center value, and output the PWM signal having the calculated target duty ratio to a gate of each of the high-potential-side switching element (Qah, Qbh, and Qch) and the low-potential-side switching element (Qal, Qbl, and Qcl); and
  a storage unit (32) configured to store a first threshold value ($TH_1$) set to be a predetermined value smaller than a smaller duty ratio of a duty ratio at which a switching noise, the switching noise being caused by the high-potential-side switching element (Qah, Qbh, and Qch) and the low-potential-side switching element (Qal, Qbl, and Qcl) to gates of which the PWM signal having a maximum target duty ratio among the target duty ratios is input, starts to overlap in the first measurement period ($Ts_1$) and a duty ratio corresponding to a timing at which the first measurement period ($Ts_1$) ends and a second threshold value ($TH_2$), the second threshold value ($TH_2$) being a duty ratio at which a timing at which the low-potential-side switching element (Qal, Qbl, and Qcl) to a gate of which the PWM signal having a second duty ratio, the second duty ratio being a second-largest target duty ratio among the target duty ratios, is input is switched from an on state to an off state is later than an end of the second measurement period ($Ts_2$),
  wherein the phase current measurement unit (35)
  calculates an amplitude of voltage command values of each phase of the polyphase motor (78),
  calculates an amplitude of the target duty ratios by multiplying the amplitude of the voltage command values by $\sqrt{3}/2$,
  calculates a target duty ratio amplitude value by adding 50% points to the amplitude of the target duty ratios,
  performs detection of the phase currents in the first measurement period ($Ts_1$) when a target duty ratio amplitude value, the target duty ratio amplitude value being a value obtained by adding 50% points to amplitude of the target duty ratios, is less than the first threshold value ($TH_1$) or when the target duty ratio amplitude value is greater than or equal to the first threshold value ($TH_1$) and the second duty ratio is greater than the second threshold value ($TH_2$), and
  performs measurement of the phase currents in the second measurement period ($Ts_2$) when the target duty ratio amplitude value is greater than or equal to the first threshold value ($TH_1$) and the second duty ratio is less than or equal to the second threshold value ($TH_2$),
  wherein the first measurement period ($Ts_1$) is set between a timing at which a noise occurring when a first switching element (Q1h), which is the high-potential-side switching element (Qah, Qbh, and Qch) to the gate of which the PWM signal having the maximum target duty ratio is input, is switched from an on state to the off state has converged and a timing at which the low-potential-side switching element (Qal, Qbl, and Qcl) corresponding to the first switching element (Q1h) is switched from an on state to an off state, and
  wherein the second measurement period ($Ts_2$) is set between a timing at which a noise having occurred in an interlocked manner with a noise occurring when the first switching element (Q1h) is switched from the off state to the on state has converged and a timing at which a second switching element (Q2l), which is the low-potential-side switching element (Qal, Qbl, and Qcl) to the gate of which the PWM signal having the second duty ratio is input is switched from an on state to an off state.

2. The motor control device according to claim 1, wherein the first measurement period ($Ts_1$) is a period started a predetermined delay time later than a center of the PWM signal.

3. The motor control device according to claim 1, wherein

the polyphase motor (78) is a three-phase motor, and
the PWM signal generation unit (33)
further includes a voltage command value calculation unit (45) configured to generate, based on the phase currents, a voltage command value of each phase, the voltage command value having amplitude of a predetermined magnitude and varying at most from -50% to 50% with 0% as a vibration center value, and calculates the target duty ratio by adding 50% points to a voltage command value of the each phase.

4. The motor control device according to claim 1, wherein

the polyphase motor (78) is a three-phase motor,
the PWM signal generation unit (33) further includes:

a voltage command value calculation unit (45) configured to generate, based on the phase currents, a voltage command value of each phase, the voltage command value having amplitude of a predetermined magnitude and varying at most from -50% to 50% with 0% as a vibration center value; and
a command value correction unit (43) configured to subtract an average value of a voltage command value of a maximum phase having a maximum voltage command value among three phases and a voltage command value of a minimum phase having a minimum voltage command value from a voltage command value of the each phase and generate corrected three-phase voltage command values, and
calculates the target duty ratios by adding 50% points to the corrected three-phase voltage command values, and
the phase current measurement unit (35)
uses, as the target duty ratio amplitude value to be compared with the first threshold value ($TH_1$), a value obtained by adding 50% points to a value obtained by multiplying amplitude of a voltage command value of the each phase by $\sqrt{3}/2$.

5. The motor control device according to claim 1, wherein

the polyphase motor (78) is a three-phase motor,
the PWM signal generation unit (33) further includes:

a voltage command value calculation unit (45) configured to generate, based on the phase currents, a voltage command value of each phase, the voltage command value having amplitude of a predetermined magnitude and varying at most from -50% to 50% with 0% as a vibration center value; and
a command value correction unit (43) configured to subtract an excess exceeding a value of $\sqrt{3}/2$ times amplitude of a voltage command value of the each phase from a voltage command value of the each phase and generate corrected three-phase voltage command values, and
calculates the target duty ratios by adding 50% points to the corrected three-phase voltage command values, and
the phase current measurement unit (35)
uses, as the target duty ratio amplitude value to be compared with the first threshold value ($TH_1$), a value obtained by adding 50% points to a value obtained by multiplying amplitude of a voltage command value of the each phase by $\sqrt{3}/2$.

6. The motor control device according to claim 1, wherein

the polyphase motor (78) is a three-phase motor,
the PWM signal generation unit (33) further includes:

a voltage command value calculation unit (45) configured to generate, based on the phase currents, a voltage command value of each phase, the voltage command value having amplitude of a predetermined magnitude

and varying at most from -50% to 50% with 0% as a vibration center value; and
a command value correction unit (43) configured to subtract a voltage command value of a minimum phase having a minimum voltage command value among three phases from a voltage command value of the each phase and generate corrected three-phase voltage command values, and
calculates the corrected three-phase voltage command values as the target duty ratios, and
the phase current measurement unit (35)
uses, as the target duty ratio amplitude value to be compared with the first threshold value ($TH_1$), a value obtained by doubling amplitude of a voltage command value of the each phase.

7. The motor control device according to claim 1, wherein

the polyphase motor (78) is a three-phase motor,
the PWM signal generation unit (33) further includes:

a voltage command value calculation unit (45) configured to generate, based on the phase currents, a voltage command value of each phase, the voltage command value having amplitude of a predetermined magnitude and varying at most from -50% to 50% with 0% as a vibration center value; and
a command value correction unit (43) configured to subtract an excess exceeding a predetermined value having been determined in advance from a voltage command value of the each phase and generate corrected three-phase voltage command values, and
calculates the target duty ratios by adding 50% points to the corrected three-phase voltage command values, and
the phase current measurement unit (35)
uses a value obtained by adding 50% points to a smaller numerical value of amplitude of a voltage command value of the each phase and the predetermined value as the target duty ratio amplitude value.

8. The motor control device according to claim 1, wherein

the PWM signal generation unit (33)
in calculating the target duty ratio amplitude value, further adds a dead time compensation amount and uses the calculated value as the target duty ratio amplitude value.

9. An electric power steering device (100) comprising:

the motor control device according to any one of claims 1 to 8; and
a polyphase motor (78) controlled by the motor control device,
wherein the electric power steering device (100) provides a steering system of a vehicle with steering assist force by the polyphase motor (78).

**Patentansprüche**

1. Motorsteuervorrichtung, konfiguriert zur Steuerung eines Mehrphasenmotors (78) mit drei oder mehr Phasen, wobei die Motorsteuervorrichtung umfasst:

eine Brückenschaltung (21), konfiguriert durch parallele Verbindung von Phasenkreisen, die jeweils einer Phase des Mehrphasenmotors (78) entsprechend gebildet sind und in Reihe ein Schaltelement (Qah, Qbh und Qch) einer Hochpotentialseite, ein Schaltelement (Qal, Qbl und Qcl) einer Niederpotentialseite und einen Shuntwiderstand (Ra, Rb und Rc), der auf einer Niederpotentialseite des Schaltelements (Qal, Qbl und Qcl) der Niederpotentialseite angeordnet ist, enthält;
eine Phasenstrommesseinheit (35), konfiguriert zur Messung der durch die Shuntwiderstände (Ra, Rb und Rc) fließenden Phasenströme in einer ersten Messzeitperiode ($Ts_1$) oder einer zweiten Messzeitperiode ($Ts_2$), wobei die zweite Messzeitperiode ($Ts_2$) nach der ersten Messzeitperiode ($Ts_1$) beginnt;
eine PWM-Signalerzeugungseinheit (33), die konfiguriert ist, in Bezug auf jede Phase des Mehrphasenmotors (78) basierend auf dem Phasenstrom ein Soll-Tastverhältnis zu berechnen, wobei das Soll-Tastverhältnis ein Soll-Tastverhältnis eines PWM-Signals zur Ansteuerung der Schaltelemente auf der Hochpotentialseite (Qah, Qbh und Qch) und der Schaltelemente auf der Niederpotentialseite (Qal, Qbl und Qcl) ist, dessen Amplitude einen vorbestimmten Betrag aufweist und höchstens zwischen 0 % und 100 % variiert,

wobei 50 % den Schwingungsmittelwert darstellen, und das PWM-Signal mit dem berechneten Soll-Tastverhältnis an ein Gate jedes der Schaltelemente (Qah, Qbh und Qch) der Hochpotentialseite und der Schaltelemente (Qal, Qbl und Qcl) der Niederpotentialseite auszugeben; und

eine Speichereinheit (32), die konfiguriert ist, einen ersten Schwellenwert ($TH_1$), der auf einen vorbestimmten Wert eingestellt ist, der kleiner als ein kleineres Tastverhältnis eines Tastverhältnisses ist, bei dem sich ein Schaltrauschen, wobei das Schaltrauschen verursacht wird durch die Schaltelemente (Qah, Qbh und Qch) der Hochpotentialseite sowie die Schaltelemente (Qal, Qbl und Qcl) der Niederpotentialseite an Gates deren PWM-Signal mit einem maximalen Soll-Tastverhältnis unter den Soll-Tastverhältnissen eingegeben wird, in der ersten Messzeitperiode ($Ts_1$) zu überlappen beginnt, und ein Tastverhältnis, welches dem Zeitpunkt entspricht, zu dem die erste Messzeitperiode ($Ts_1$) endet, und einen zweiten Schwellenwert ($TH_2$) zu speichern,

wobei der zweite Schwellenwert ($TH_2$) ein Tastverhältnis ist, bei dem ein Zeitpunkt, an dem das Schaltelement (Qal, Qbl und Qcl) auf der Niederpotentialseite an ein Gate dessen PWM-Signal mit einem zweiten Tastverhältnis,

wobei das zweite Tastverhältnis ein zweithöchstes Soll-Tastverhältnis unter den Soll-Tastverhältnissen ist eingegeben wird, von einem Ein- in einen Aus-Zustand geschalten wird, später ist als ein Ende der zweiten Messzeitperiode ($Ts_2$),

wobei die Phasenstrommesseinheit (35)

eine Amplitude von Spannungs-Befehlswerten jeder Phase des Mehrphasenmotors (78) berechnet,

eine Amplitude der Soll-Tastverhältnisse durch Multiplikation der Amplitude der Spannungs-Befehlswerte mit $\sqrt{3}/2$ berechnet,

einen Soll-Tastverhältnis-Amplitudenwert durch Addition von 50 %-Punkten zur Amplitude der Soll-Tastverhältnisse berechnet,

Erfassung der Phasenströme in der ersten Messzeitperiode ($Ts_1$) ausführt,

wenn ein Soll-Tastverhältnis-Amplitudenwert, wobei der Soll-Tastverhältnis-Amplitudenwert ein Wert ist , welcher durch Addition von 50 %-Punkten zur Amplitude der Soll-Tastverhältnisse erhalten wird, kleiner als der erste Schwellenwert ($TH_1$) ist oder wenn der Soll-Tastverhältnis-Amplitudenwert größer oder gleich dem ersten Schwellenwert ($TH_1$) ist und das zweite Tastverhältnis größer als der zweite Schwellenwert ($TH_2$) ist, und

Messung der Phasenströme in der zweiten Messzeitperiode ($Ts_2$) ausführt,

wenn der Soll-Tastverhältnis-Amplitudenwert größer oder gleich dem ersten Schwellenwert ($TH_1$) ist und das zweite Tastverhältnis kleiner oder gleich dem zweiten Schwellenwert ($TH_2$) ist,

wobei die erste Messperiode ($Ts_1$) zwischen dem Zeitpunkt gesetzt ist, an dem ein Rauschen, das beim Umschalten eines ersten Schaltelements (Q1h),

welches das Schaltelement (Qah, Qbh und Qch) der Hochpotentialseite ist, an dessen Gate das PWM-Signal mit dem maximalen Soll-Tastverhältnis eingegeben wird, von einem Ein-Zustand in den Aus-Zustand geschalten wird auftritt, konvergiert ist, und dem Zeitpunkt, an dem das dem ersten Schaltelement (Q1h) entsprechende Schaltelement (Qal, Qbl und Qcl) der Niederpotentialseite von einem Ein-Zustand in den Aus-Zustand geschaltet wird, und

wobei die zweite Messperiode ($Ts_2$) zwischen dem Zeitpunkt gesetzt ist, an dem ein Rauschen, das zeitversetzt mit einem Rauschen beim Umschalten des ersten Schaltelements (Q1h) vom Aus-Zustand in den Ein-Zustand auftritt, konvergiert ist, und einem Zeitpunkt, an dem ein zweites Schaltelement (Q2l), welches das Schaltelement (Qal, Qbl und Qcl) der Niederpotentialseite ist, an dessen Gate das PWM-Signal mit dem zweiten Tastverhältnis eingegeben wird, vom einem Ein-Zustand in einen Aus-Zustand geschaltet wird.

2. Motorsteuervorrichtung nach Anspruch 1, wobei die erste Messperiode ($Ts_1$) eine Periode ist, die zu einer vorbestimmten Verzögerungszeit später als der Mittelpunkt des PWM-Signals beginnt.

3. Motorsteuervorrichtung nach Anspruch 1, wobei

der Mehrphasenmotor (78) ein Dreiphasenmotor ist und
die PWM-Signalerzeugungseinheit (33)
ferner eine Spannungs-Befehlswertberechnungseinheit (45) enthält, die konfiguriert ist, basierend auf den Phasenströmen einen Spannungs-Befehlswert für jede Phase zu erzeugen, wobei der Spannungs-Befehlswert eine Amplitude von einem vorbestimmten Betrag aufweist und höchstens zwischen -50 % und 50 % variiert, wobei 0 % einen Schwingungsmittelwert darstellt, und
welche das Soll-Tastverhältnis durch Addition von 50 %-Punkten zu einem Spannungs-Befehlswert der jeweiligen Phase berechnet.

4. Motorsteuervorrichtung nach Anspruch 1, wobei

der Mehrphasenmotor (78) ein Dreiphasenmotor ist,
die PWM-Signalerzeugungseinheit (33) ferner enthält:

eine Spannungs-Befehlswertberechnungseinheit (45), die konfiguriert ist, auf Basis der Phasenströme einen Spannungs-Befehlswert für jede Phase zu erzeugen, wobei der Spannungs-Befehlswert eine Amplitude von einem vorbestimmten Betrag aufweist und höchstens zwischen -50 % und 50 % variiert, wobei 0 % einen Schwingungsmittelwert darstellt; und

eine Befehlswertkorrektureinheit (43), die konfiguriert ist, einen Mittelwert eines Spannungs-Befehlswerts einer maximalen Phase mit einem maximalen Spannungs-Befehlswert unter drei Phasen und einen Spannungs-Befehlswert einer minimalen Phase mit einem minimalen Spannungs-Befehlswert von dem Spannungs-Befehlswert der jeweiligen Phase zu subtrahieren und korrigierte Dreiphasen-Spannungs-Befehlswerte zu erzeugen, und

welche die Soll-Tastverhältnisse berechnet, indem sie 50 %-Punkte zu den korrigierten Dreiphasen-Spannungs-Befehlswerten addiert, und

die Phasenstrommesseinheit (35)

als den Soll-Tastverhältnis-Amplitudenwert, der mit dem ersten Schwellenwert ($TH_1$) zu vergleichen ist, einen Wert verwendet, der durch Addition von 50 %-Punkten zu einem Wert erhalten wird, der durch Multiplikation der Amplitude eines Spannungs-Befehlswerts der jeweiligen Phase mit $\sqrt{3}/2$ erhalten wird.

5. Motorsteuervorrichtung nach Anspruch 1, wobei

der Mehrphasenmotor (78) ein Dreiphasenmotor ist,
die PWM-Signalerzeugungseinheit (33) ferner enthält:

eine Spannungs-Befehlswertberechnungseinheit (45), die konfiguriert ist, auf Basis der Phasenströme einen Spannungs-Befehlswert für jede Phase zu erzeugen, wobei der Spannungs-Befehlswert eine Amplitude von einem vorbestimmten Betrag aufweist und höchstens zwischen -50 % und 50 % variiert, wobei 0 % einen Schwingungsmittelwert darstellt; und

eine Befehlswertkorrektureinheit (43), die konfiguriert ist, einen Überschuss, welcher einen Wert eines $\sqrt{3}/2$-fachen der Amplitude eines Spannungs-Befehlswerts der jeweiligen Phase übersteigt von einem Spannungs-Befehlswert der jeweiligen Phase zu subtrahieren und korrigierte Dreiphasen-Spannungs-Befehlswerte zu erzeugen, und

welche die Soll-Tastverhältnisse durch Addieren von 50 %-Punkten zu den korrigierten Dreiphasen-Spannungs-Befehlswerten berechnet, und

die Phasenstrommesseinheit (35)

als den Soll-Tastverhältnis-Amplitudenwert, der mit dem ersten Schwellenwert (TH1) zu vergleichen ist, einen Wert verwendet, der durch Addition von 50 %-Punkten zu einem Wert erhalten wird, der durch Multiplikation der Amplitude eines Spannungs-Befehlswerts der jeweiligen Phase mit $\sqrt{3}/2$ erhalten wird.

6. Motorsteuervorrichtung nach Anspruch 1, wobei

der Mehrphasenmotor (78) ein Dreiphasenmotor ist,
die PWM-Signalerzeugungseinheit (33) ferner enthält:

eine Spannungs-Befehlswertberechnungseinheit (45), die konfiguriert ist, auf Basis der Phasenströme einen Spannungs-Befehlswert für jede Phase zu erzeugen, wobei der Spannungs-Befehlswert eine Amplitude von einem vorbestimmten Betrag aufweist und höchstens zwischen -50 % und 50 % variiert, wobei 0 % einen Schwingungsmittelwert darstellt; und

eine Befehlswertkorrektureinheit (43), die konfiguriert ist, einen Spannungs-Befehlswert einer minimalen Phase mit einem minimalen Spannungs-Befehlswert unter den drei Phasen von einem Spannungs-Befehlswert der jeweiligen Phase zu subtrahieren und korrigierte Dreiphasen-Spannungs-Befehlswerte zu erzeugen, und

welche die korrigierten Dreiphasen-Spannungs-Befehlswerte als die Soll-Tastverhältnisse berechnet, und

die Phasenstrommesseinheit (35)

als den Soll-Tastverhältnis-Amplitudenwert, der mit dem ersten Schwellenwert ($TH_1$) zu vergleichen ist, einen Wert verwendet, der durch Verdopplung der Amplitude eines Spannungs-Befehlswerts der jeweiligen Phase erhalten wird.

**7.** Motorsteuervorrichtung nach Anspruch 1, wobei

der Mehrphasenmotor (78) ein Dreiphasenmotor ist,
die PWM-Signalerzeugungseinheit (33) ferner enthält:

eine Spannungs-Befehlswertberechnungseinheit (45), die konfiguriert ist, auf Basis der Phasenströme einen Spannungs-Befehlswert jeder Phase zu erzeugen, wobei der Spannungs-Befehlswert eine Amplitude von einem vorbestimmten Betrag aufweist und höchstens zwischen -50 % und 50 % variiert, wobei 0 % einen Schwingungsmittelwert darstellt; und
eine Befehlswertkorrektureinheit (43), die konfiguriert ist, einen Überschuss,
welcher einen vorbestimmten Wert, der zuvor bestimmt wurde, übersteigt, von einem Spannungs-Befehlswert der jeweiligen Phase zu subtrahieren und korrigierte Dreiphasen-Befehlswerte zu erzeugen, und die Soll-Tastverhältnisse durch Addition von 50 %-Punkten zu den korrigierten Dreiphasen-Befehlswerten berechnet, und
die Phasenstrommesseinheit (35)
einen Wert, der durch Addition von 50 %-Punkten zu einem kleineren numerischen Wert einer Amplitude eines Spannungs-Befehlswerts der jeweiligen Phase und dem vorbestimmten Wert erhalten wird, als den Soll-Tastverhältnis-Amplitudenwert verwendet.

**8.** Motorsteuervorrichtung nach Anspruch 1, wobei

die PWM-Signalerzeugungseinheit (33)
bei der Berechnung des Soll-Tastverhältnis-Amplitudenwerts zusätzlich einen Totzeitkompensationswert hinzufügt und den berechneten Wert als Soll-Tastverhältnis-Amplitudenwert verwendet.

**9.** Elektrische Servolenkvorrichtung (100), umfassend:

die Motorsteuervorrichtung nach einem der Ansprüche 1 bis 8; und
einen von der Motorsteuervorrichtung gesteuerten Mehrphasenmotor (78), wobei die elektrische Servolenkvorrichtung (100) einem Lenksystem eines Fahrzeugs Lenkunterstützungskraft durch den Mehrphasenmotor (78) bereitstellt.

**Revendications**

**1.** Dispositif de commande de moteur configuré pour commander un moteur polyphasé (78) comportant trois phases ou plus, le dispositif de commande de moteur comprenant :

un circuit en pont (21) configuré en connectant en parallèle des circuits de phase formés chacun en correspondance avec l'une des phases du moteur polyphasé (78) et comprenant en série un élément de commutation côté haut potentiel (Qah, Qbh, et Qch), un élément de commutation côté bas potentiel (Qal, Qbl, et Qcl), et une résistance shunt (Ra, Rb, et Rc) disposée au niveau d'un côté bas potentiel de l'élément de commutation côté bas potentiel (Qal, Qbl, et Qcl) ;
une unité de mesure de courant de phase (35) configurée pour mesurer des courants de phase circulant à travers les résistances shunt (Ra, Rb, et Rc) au cours d'une première période de mesure ($Ts_1$) et d'une deuxième période de mesure ($Ts_2$), la deuxième période de mesure ($Ts_2$) commençant après la première période de mesure ($Ts_1$) ;
une unité de génération de signal PWM (33) configurée pour, relativement à chaque phase du moteur polyphasé (78), calculer, à partir du courant de phase, un rapport cyclique cible, le rapport cyclique cible étant un rapport cyclique cible d'un signal PWM pour commander l'élément de commutation côté haut potentiel (Qah, Qbh, et Qch) et l'élément de commutation côté bas potentiel (Qal, Qbl, et Qcl), ayant une amplitude d'une grandeur prédéterminée, et variant au maximum de 0 % à 100 % avec 50 % comme une valeur centrale de vibration, et délivrer le signal PWM ayant le rapport cyclique cible calculé à une grille de chacun de l'élément de commutation côté haut potentiel (Qah, Qbh, et Qch) et de l'élément de commutation côté bas potentiel (Qal, Qbl, et Qcl) ; et
une unité de stockage (32) configurée pour stocker une première valeur de seuil ($TH_1$) définie comme une valeur prédéterminée inférieure au plus petit rapport cyclique parmi les rapports cycliques pour lesquels un bruit de commutation, le bruit de commutation étant causé par l'élément de commutation côté haut potentiel (Qah, Qbh, et Qch) et l'élément de commutation côté bas potentiel (Qal, Qbl et Qcl), aux grilles desquels le signal PWM ayant un rapport cyclique cible maximal parmi les rapports cycliques cibles est appliqué, commence à se chevaucher dans la première période de mesure (Ts$_1$) et un rapport cyclique correspondant à un instant où la première période de mesure (Ts$_1$) se termine et une deuxième valeur de seuil (TH$_2$), la deuxième valeur de seuil (TH$_2$) étant un rapport cyclique auquel un moment où l'élément de commutation côté bas potentiel (Qal, Qbl, et Qcl), à la grille duquel est appliqué le signal PWM ayant un deuxième rapport cyclique, le deuxième rapport cyclique étant le deuxième plus grand rapport cyclique cible parmi les rapports cycliques cibles, est commuté d'un état activé à un état désactivé est postérieur à une fin de la deuxième période de mesure (Ts$_2$),

dans lequel l'unité de mesure du courant de phase (35) calcule une amplitude des valeurs de commande de tension de chaque phase du moteur polyphasé (78),

calcule une amplitude des rapports cycliques cibles en multipliant l'amplitude des valeurs de commande de tension par √3/2,

calcule une valeur d'amplitude de rapport cyclique cible en ajoutant 50 % à l'amplitude des rapports cycliques cibles,

effectue la détection des courants de phase au cours de la première période de mesure (Ts$_1$) lorsqu'une valeur d'amplitude de rapport cyclique cible, la valeur d'amplitude de rapport cyclique cible étant une valeur obtenue en ajoutant 50 % à l'amplitude des rapports cycliques cibles, est inférieure à la première valeur de seuil (TH$_1$) ou lorsque la valeur d'amplitude du rapport cyclique cible est supérieure ou égale à la première valeur d seuil (TH$_1$) et que le deuxième rapport cyclique est supérieur à la deuxième valeur de seuil (TH$_2$), et

effectue la mesure des courants de phase au cours de la deuxième période de mesure (Ts$_2$) lorsque la valeur d'amplitude du rapport cyclique cible est supérieure ou égale à la première valeur de seuil (TH$_1$) et que le deuxième rapport cyclique est inférieur ou égal à la deuxième valeur de seuil (TH$_2$),

dans lequel la première période de mesure (Ts$_1$) est définie entre un instant auquel un bruit survenant lorsqu'un premier élément de commutation (Qlh), qui est l'élément de commutation côté haut potentiel (Qah, Qbh, et Qch), à la grille duquel est appliqué le signal PWM ayant le rapport cyclique cible maximal, passe d'un état activé à l'état désactivé et s'est stabilisé, et un instant auquel l'élément de commutation côté bas potentiel (Qal, Qbl et Qcl) correspondant au premier élément de commutation (Qlh) passe d'un état activé à l'état désactivé, et

dans lequel la deuxième période de mesure (Ts$_2$) est définie entre un instant auquel un bruit étant survenu d'une manière intercalée avec un bruit survenant lorsque le premier élément de commutation (Qlh) passe de l'état désactivé à l'état activé a convergé et un instant auquel un deuxième élément de commutation (Q2l), qui est l'élément de commutation côté bas potentiel (Qal, Qbl, et Qcl) à la grille duquel le signal PWM ayant le deuxième rapport cyclique est appliqué, passe d'un état activé à un état désactivé.

2. Dispositif de commande de moteur selon la revendication 1, dans lequel la première période de mesure (Ts$_1$) est une période qui commence avec un temps de retard prédéterminé après un centre du signal PWM.

3. Dispositif de commande de moteur selon la revendication 1, dans lequel

le moteur polyphasé (78) est un moteur triphasé, et l'unité de génération de signal PWM (33) comprend en outre une unité de calcul de valeur de commande de tension (45) configurée pour générer, sur la base des courants de phase, une valeur de commande de tension pour chaque phase, la valeur de commande de tension ayant une amplitude d'une grandeur prédéterminée et variant au plus de -50 % à 50 %, avec 0 % comme une valeur centrale de vibration, et

calcule le rapport cyclique en ajoutant 50 % à une valeur de commande de tension de chaque phase.

4. Dispositif de commande de moteur selon la revendication 1, dans lequel

le moteur polyphasé (78) est un moteur triphasé, l'unité de génération de signal PWM (33) comprend en outre :

une unité de calcul de valeur de commande de tension (45) configurée pour générer, sur la base des courants de phase, une valeur de commande de tension pour chaque phase, la valeur de commande de tension ayant une amplitude d'une grandeur prédéterminée et variant au maximum de -50 % à 50 %, avec 0 % comme une valeur centrale de vibration ; et

une unité de correction de valeur de commande (43) configurée pour soustraire une valeur moyenne d'une valeur de commande de tension d'une phase maximale ayant une valeur de commande de tension maximale parmi trois phases et une valeur de commande de tension d'une phase minimale ayant une valeur de commande de tension minimale à partir d'une valeur de commande de tension de chaque phase et générer des valeurs de commande de tension triphasées corrigées, et

calcule les rapports cycliques cibles en ajoutant 50 % aux valeurs de commande de tension triphasées corrigées, et

l'unité de mesure de courant de phase (35) utilise, comme valeur d'amplitude du rapport cyclique cible à comparer à la première valeur de seuil (TH$_1$), une valeur obtenue en ajoutant 50 % à une valeur obtenue en multipliant l'amplitude d'une valeur de commande de tension de chaque phase par √3/2.

5. Dispositif de commande de moteur selon la revendication 1, dans lequel
le moteur polyphasé (78) est un moteur triphasé, l'unité de génération de signaux PWM (33) comprend en outre :

   une unité de calcul de valeur de commande de tension (45) configurée pour générer, sur la base des courants de phase, une valeur de commande de tension de chaque phase, la valeur de commande de tension ayant une amplitude d'une grandeur prédéterminée et variant au maximum de -50 % à 50 %, avec 0 % comme une valeur centrale de vibration ; et
   une unité de correction de valeur de commande (43) configurée pour soustraire un excès dépassant une valeur de √3/2 fois l'amplitude d'une valeur de commande de tension de chaque phase d'une valeur de commande de tension de chaque phase et générer des valeurs de commande de tension triphasées corrigées, et
   calcule les rapports cycliques cibles en ajoutant 50 % aux valeurs de commande de tension triphasées corrigées, et
   l'unité de mesure de courant de phase (35) utilise, comme valeur d'amplitude du rapport cyclique cible à comparer à la première valeur de seuil (TH$_1$), une valeur obtenue en ajoutant 50 % à une valeur obtenue en multipliant l'amplitude d'une valeur de commande de tension de chaque phase par √3/2.

6. Dispositif de commande de moteur selon la revendication 1, dans lequel
le moteur polyphasé (78) est un moteur triphasé, l'unité de génération de signal PWM (33) comprend en outre :

   une unité de calcul de valeur de commande de tension (45) configurée pour générer, sur la base des courants de phase, une valeur de commande de tension de chaque phase, la valeur de commande de tension ayant une amplitude d'une grandeur prédéterminée et variant au maximum de -50 % à 50 %, avec 0 % comme une valeur centrale de vibration, et
   une unité de correction de valeur de commande (43) configurée pour soustraire une valeur de commande de tension d'une phase minimale ayant une valeur de commande de tension minimale parmi trois phases d'une valeur de commande de tension de chaque phase et générer des valeurs de commande de tension triphasées corrigées, et
   calcule les valeurs de commande de tension triphasées corrigées en tant que rapports cycliques cibles, et
   l'unité de mesure de courant de phase (35) utilise, comme valeur d'amplitude du rapport cyclique cible à comparer à la première valeur de seuil (TH$_1$), une valeur obtenue en doublant l'amplitude d'une valeur de commande de tension de chaque phase.

7. Dispositif de commande de moteur selon la revendication 1, dans lequel
le moteur polyphasé (78) est un moteur triphasé, l'unité de génération de signaux PWM (33) comprend en outre :

   une unité de calcul de valeur de commande de tension (45) configurée pour générer, sur la base des courants de phase, une valeur de commande de tension de chaque phase, la valeur de commande de tension ayant une amplitude d'une grandeur prédéterminée et variant au maximum de -50 % à 50 %, avec 0 % comme une valeur centrale de vibration ; et
   une unité de correction de valeur de commande (43) configurée pour soustraire un excès dépassant une valeur prédéterminée ayant été déterminée à l'avance d'une valeur de commande de tension de chaque phase et générer des valeurs de commande de tension triphasées corrigées, et
   calcule les rapports cycliques cibles en ajoutant 50 % aux valeurs de commande de tension triphasées corrigées, et
   l'unité de mesure du courant de phase (35) utilise une valeur obtenue en ajoutant 50 % à la plus petite valeur numérique d'amplitude d'une valeur de commande de tension de chaque phase et à la valeur prédéterminée comme la valeur d'amplitude du rapport cyclique cible.

8. Dispositif de commande de moteur selon la revendication 1, dans lequel
l'unité de génération de signal PWM (33) lors du calcul de la valeur d'amplitude du rapport cyclique cible, ajoute en outre une quantité de compensation du temps mort et utilise la valeur calculée comme la valeur d'amplitude du rapport cyclique cible.

9. Dispositif de direction assistée électrique (100) comprenant :

le dispositif de commande de moteur selon l'une quelconque des revendications 1 à 8 ; et
un moteur polyphasé (78) commandé par le dispositif de commande de moteur,
dans lequel le dispositif de direction assistée électrique (100) fournit un système de direction d'un véhicule avec une force d'assistance à la direction grâce au moteur polyphasé (78).

# FIG. 1

## FIG. 2

ELECTRONIC CONTROL UNIT(ECU) — 30

PWM SIGNAL GENERATION UNIT — 33

VOLTAGE COMMAND VALUE CALCULATION UNIT — 45

Th → **CURRENT COMMAND VALUE CALCULATION UNIT** (37) → Iq0, Id0

39, 40: Δq, Δd

41: **PI CONTROL UNIT** → vq, vd

42: **TWO-PHASE /THREE-PHASE CONVERSION UNIT** → va0, vb0, vc0

43: **COMMAND VALUE CORRECTION UNIT** → va1, vb1, vc1

44: **PWM CONTROL UNIT**

34: **INV**

20: **MOTOR**

35, 14: **ROTATION ANGLE SENSOR**

**PHASE CURRENT MEASUREMENT UNIT**

46: **MEASUREMENT TIMING GENERATION UNIT** → S

32: **STORAGE UNIT**

38: **THREE-PHASE /TWO-PHASE CONVERSION UNIT** ← iq, id

47: **MEASUREMENT EXECUTION UNIT** ← ia, ib, ic

va vb vc

θm

36: **ANGULAR VELOCITY CONVERSION UNIT** → ω

θm

EP 4 475 427 B1

# FIG. 3

ELECTRICAL ANGLE [deg]

— : CORRECTED THREE-PHASE VOLTAGE COMMAND VALUES va1,vb1,vc1
- - - : SIN WAVE-TYPE THIRD HARMONIC WAVE thw1
— : THREE-PHASE VOLTAGE COMMAND VALUES va0,vb0,vc0

# FIG. 4

FROM PWM
CONTROL
UNIT 44

TO CURRENT MEASUREMENT UNIT 35

FIG. 5A

P

Da

Db

PWMT        PWMT=50μs

FIG. 5B  Qah
(Q1h)

FIG. 5C  Qal
(Q1l)

FIG. 5D  Qbh

FIG. 5E  Qbl
(Q2l)

FIG. 5F  ia

Td$_1$ Ts$_1$

FIG. 5G  ib

Td$_2$  Ts$_2$

C

# FIG. 6

```
                    START

S101    AMPLITUDE A₁+50%<TH₁?        Yes
                                            │
              No                            │
               │                            │
S102    INTERMEDIATE DUTY D2>TH₂?     Yes    │
                                       ──────┤
              No                            │
               │                            │
S104  SELECT SECOND              SELECT FIRST        S103
      MEASUREMENT PERIOD Ts₂     MEASUREMENT PERIOD Ts₁

                    RETURN
```

# FIG. 7

```
                    START

S201    MAXIMUM DUTY D1<TH₁?         Yes
                                            │
              No                            │
               │                            │
S102    INTERMEDIATE DUTY D2>TH₂?     Yes    │
                                       ──────┤
              No                            │
               │                            │
S104  SELECT SECOND              SELECT FIRS        S103
      MEASUREMENT PERIOD Ts₂     MEASUREMENT PERIOD Ts₁

                    RETURN
```

# FIG. 8A

# FIG. 8B

# FIG. 8C

**FIG. 9A**

Da  Db  Dc

TARGET DUTY RATIO OF PWM SIGNAL[%]

TH₁
TH₂

ELECTRICAL ANGLE [deg]

**FIG. 9B**

MEASUREMENT TIMING OF PHASE CURRENT[μs]

:COMPARATIVE EXAMPLE  ———:FIRST EMBODIMENT

ELECTRICAL ANGLE [deg]

**FIG. 9C**

OUTPUT TORQUE OF MOTOR[-]

:COMPARATIVE EXAMPLE  ———:FIRST EMBODIMENT

ELECTRICAL ANGLE [deg]

## FIG. 10

ELECTRICAL ANGLE [deg]

—— : CORRECTED THREE-PHASE VOLTAGE COMMAND VALUES va1,vb1,vc1

--- : TRIANGULAR WAVE-TYPE THIRD HARMONIC WAVE thw2

EP 4 475 427 B1

EP 4 475 427 B1

FIG. 11A

FIG. 11B

FIG. 11C

## FIG. 12A

Da  Db  Dc

TARGET DUTY RATIO OF PWM SIGNAL [%]

TH₁
TH₂

ELECTRICAL ANGLE [deg]

## FIG. 12B

MEASUREMENT TIMING OF PHASE CURRENT [μs]

——— :COMPARATIVE EXAMPLE  ——— :VARIATION OF FIRST EMBODIMENT

ELECTRICAL ANGLE [deg]

## FIG. 12C

OUTPUT TORQUE OF MOTOR [−]

——— :COMPARATIVE EXAMPLE  ——— :VARIATION OF FIRST EMBODIMENT

ELECTRICAL ANGLE [deg]

EP 4 475 427 B1

EP 4 475 427 B1

# FIG. 13A

# FIG. 13B

—— :COMPARATIVE EXAMPLE ━━ :VARIATION OF FIRST EMBODIMENT

# FIG. 13C

—— :COMPARATIVE EXAMPLE ━━ :VARIATION OF FIRST EMBODIMENT

FIG. 14A

TARGET DUTY RATIO
OF PWM SIGNAL[%]

TH₁
TH₂

Da    Db    Dc

ELECTRICAL ANGLE [deg]

FIG. 14B

MEASUREMENT TIMING
OF PHASE CURRENT [μs]

ELECTRICAL ANGLE [deg]

——— :COMPARATIVE EXAMPLE    ——— :VARIATION OF FIRST EMBODIMENT

FIG. 14C

OUTPUT TORQUE
OF MOTOR[−]

ELECTRICAL ANGLE [deg]

——— :COMPARATIVE EXAMPLE    ——— :VARIATION OF FIRST EMBODIMENT

# FIG. 15

ELECTRONIC CONTROL UNIT(ECU) — 30

PWM SIGNAL GENERATION UNIT — 33

VOLTAGE COMMAND VALUE CALCULATION UNIT — 45

Th → CURRENT COMMAND VALUE CALCULATION UNIT (37) → Iq0 → (39) Δq → PI CONTROL UNIT (41) → vq → TWO-PHASE/THREE-PHASE CONVERSION UNIT (42) → va0, vb0, vc0 → PWM CONTROL UNIT (44) → INV (34) → MOTOR (20)

Vh →

Id0 → (40) Δd → vd

ROTATION ANGLE SENSOR (35) — 14

PHASE CURRENT MEASUREMENT UNIT

va vb vc

STORAGE UNIT (32)

MEASUREMENT TIMING GENERATION UNIT — 46 → S

THREE-PHASE/TWO-PHASE CONVERSION UNIT (38) → id, iq

ia, ib, ic → MEASUREMENT EXECUTION UNIT — 47

θm

ω → ANGULAR VELOCITY CONVERSION UNIT — 36 ← θm

EP 4 475 427 B1

FIG. 16A

TARGET DUTY RATIO OF PWM SIGNAL [%]

Da  Db  Dc

TH₁
TH₂

ELECTRICAL ANGLE [deg]

FIG. 16B

MEASUREMENT TIMING OF PHASE CURRENT [μs]

——— :COMPARATIVE EXAMPLE  ——— :VARIATION OF FIRST EMBODIMENT

ELECTRICAL ANGLE [deg]

FIG. 16C

OUTPUT TORQUE OF MOTOR [-]

——— :COMPARATIVE EXAMPLE  ——— :VARIATION OF FIRST EMBODIMENT

ELECTRICAL ANGLE [deg]

EP 4 475 427 B1

# FIG. 17

MOVEMENT DIRECTION Y

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6725450 B

- EP 3364538 A1